(19) Europäisches Patentamt
European Patent Office
Office européen des brevets

(11) Veröffentlichungsnummer: **0 161 519**
**B1**

# (12) EUROPÄISCHE PATENTSCHRIFT

(45) Veröffentlichungstag der Patentschrift: **29.06.88**

(51) Int. Cl.⁴: **C 07 F 9/09**, C 07 F 9/10

(21) Anmeldenummer: **85104662.3**

(22) Anmeldetag: **19.04.85**

## (54) Derivate des Glycerophosphocholins und Glycerophosphoethanolamins, ihre Herstellung und Verwendung.

(30) Priorität: **15.05.84 AT 1590/84**

(43) Veröffentlichungstag der Anmeldung: **21.11.85 Patentblatt 85/47**

(45) Bekanntmachung des Hinweises auf die Patenterteilung: **29.06.88 Patentblatt 88/26**

(84) Benannte Vertragsstaaten: **AT BE CH DE FR GB IT LI LU NL SE**

(56) Entgegenhaltungen:
**EP-A-0 072 940**

**JOURNAL OF THE CHEMICAL SOCIETY, Section C, 1968, Seiten 1404-1412, US; J.D. BILLIMORIA u.a.: "The synthesis of phospholipids. Part I. Phosphatidyl and lysophosphatidyl ethanolamines"**

(73) Patentinhaber: **CHEMIE LINZ AKTIENGESELLSCHAFT, St. Peter- Strasse 25, A-4020 Linz (AT)**
(84) Benannte Vertragsstaaten: **BE CH FR GB IT LI LU NL SE AT**

(73) Patentinhaber: **Lentia Gesellschaft mit beschränkter Haftung, Arabellastrasse 4 Postfach 81 05 08, D-8000 München 81 (DE)**
(84) Benannte Vertragsstaaten: **DE**

(72) Erfinder: **Paltauf, Friedrich, Dr., St. Peter Hauptstrasse 33c/19, A-8010 Graz (AT)**
Erfinder: **Hermetter, Albin, Dr., Sandgasse 25, A-8010 Graz (AT)**

**EP 0 161 519 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue Triphenylmethylderivate des sn-Glycero-3-phosphocholins und sn-Glycero-3-phosphoethanolamins, Verfahren zu deren Herstellung, sowie deren Verwendung zur Synthese von chemisch definierten, enantiomerenreinen 1,2-Diacyl-sn-glycero-3-phosphocholinen und 1,2-Diacyl-sn-glycero-3-phosphoethanolaminen, die in den Positionen 1 und 2 des Glycerins unabhängig voneinander mit verschiedenen Acylresten substituiert sind.

Nach dem derzeit bekannten Stand der Technik sind chemisch definierte Phosphatidylcholine und Phospatidylethanolamine, welche in den Positionen 1 und 2 des Glycerins voneinander verschiedene Acylreste tragen, nur über eine vielstufige Totalsynthese oder teure semisynthetische Verfahren erhältlich, die den Einsatz von Enzymen und große Überschüsse an Carbonsäuren erfordern. Der diesbezügliche Stand der Technik ist in zwei Übersichtsartikeln von H. Eibl in Chem. Phys. Lipids, Band 26 (1980) auf den Seiten 405 -429 und in der Zeitschrift für Angewandte Chemie, Band 96 (1984) auf den Seiten 247 - 262 beschrieben.

Die Synthese dieser gemischt substituierten Phosphatidylcholine und Phosphatidylethanolamine im technischen Maßstab ist mit den bisher bekannten Verfahren und den dabei verwendeten Ausgangs- und Zwischenprodukten nicht praktikabel.

Der vorliegenden Erfindung lag daher die Aufgabe zugrunde, ausgehend von einfachen und leicht zugänglichen Ausgangsmaterialien neue Zwischenprodukte für ein Verfahren zu finden, mit dem gemischt substituierte, enantiomerenreine 1,2-Diacyl-sn-glycero-3-phosphocholine und 1,2-Diacyl-sn-glycero-3-phosphoethanolamine mit definierter chemischer Struktur in wirtschaftlicher und zeitsparender Weise im technischen Maßstab hergestellt werden können. Diese Aufgabe konnte durch die vorliegende Erfindung auf unerwartet einfache und wirkungsvolle Art und Weise gelöst werden.

Gegenstand der vorliegenden Erfindung sind demnach die neuen Triphenylmethylderivate des sn-Glycero-3-phosphocholins und sn-Glycero-3-phospho-ethanolamins der allgemeinen Formel

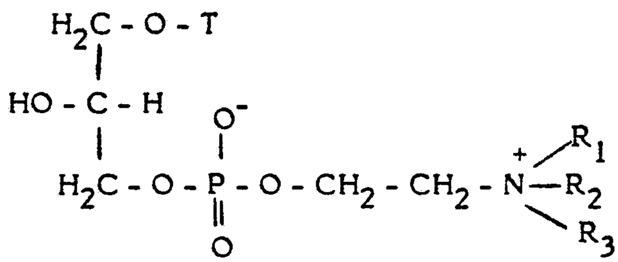

I, in der

T eine unsubstituierte oder durch $C_1$ - $C_6$-Alkyl, $C_1$ - $C_6$-Alkoxy oder Halogen ein- oder mehrfach substituierte Triphenylmethylgruppe bedeutet und die Reste

$R_1$, $R_2$, $R_3$ entweder gleich sind und jeweils für eine Methylgruppe stehen oder verschieden sind, wobei diesfalls zwei der Reste $R_1$, $R_2$ und $R_3$ immer Wasserstoff bedeuten und der dritte Rest eine unsubstituierte oder durch $C_1$ - $C_6$-Alkyl, $C_1$ - $C_6$-Alkoxy oder Halogen ein- oder mehrfach substituierte Triphenylmethylgruppe darstellt.

Die Verbindungen der allgemeinen Formel I, in denen $R_1$, $R_2$ und $R_3$ jeweils Methyl bedeuten, sind Derivate des Glycerophosphocholins, während die Verbindungen der allgemeinen Formel I, in denen zwei der Reste $R_1$, $R_2$ und $R_3$ Wasserstoff bedeuten und der dritte für eine substituierte oder unsubstituierte Triphenylmethylgruppe steht, Derivate des Glycerophosphoethanolamines darstellen.

In der allgemeinen Formel I ist der bei den erfindungsgemäßen Verbindungen mit T bezeichnete Rest und einer der Reste $R_1$, $R_2$ und $R_3$, falls die anderen beiden Reste Wasserstoff bedeuten, bevorzugt eine unsubstituierte Triphenylmethylgruppe. Von der allgemeinen Formel I sind jedoch auch solche Verbindungen umfaßt, in denen die 1-O-Triphenylmethylgruppe, und/oder eine gegebenenfalls im Molekül vorhandene N-Triphenylmethylgruppe unabhängig voneinander durch Alkylreste, wie Methyl, Ethyl, Propyl und dergleichen, Alkoxyreste wie Methoxy, Ethoxy, Propoxy und dergleichen oder Halogen, wie Fluor, Chlor oder Brom ein- oder mehrfach substituiert sind. Bei den Verbindungen der Formel I mit substituierten Triphenylmethylgruppen sind wiederum diejenigen bevorzugt, bei denen ein oder mehrere Phenylreste der Triphenylmethylgruppe(n) in para-Stellung durch einen der oben näher bezeichneten Reste substituiert sind.

Die in der vorliegenden Beschreibung verwendete Nomenklatur und Stellungsbezeichnung für das Glycerophosphocholin, Glycerophosphoethanolamin und deren Derivate folgt den im Biochem. J. 171, 29 - 35 (1978) angegebenen Regeln. Die Abkürzung "sn" in den systematischen chemischen Bezeichnungen der angeführten Verbindungen bedeutet "stereospezifisch numeriert". Sämtliche Stellungsbezeichnungen in der vorliegenden Beschreibung, die sich auf die Stellung der Substituenten am Glycerinrest beziehen, basieren auf dieser stereospezifischen Numerierung.

Die Verbindungen der allgemeinen Formel I werden hergestellt, indem man sn-Glycero-3-phosphocholin oder sn-Glycero-3-phospho-(N-triphenylmethyl)-ethanolamin der allgemeinen Formel

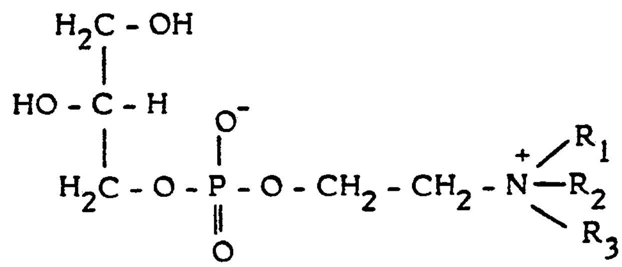

II, in der

$R_1$, $R_2$ und $R_3$ die oben angegebene Bedeutung haben, deren Salze mit anorganischen oder organischen Säuren oder Basen oder deren Komplexe mit Metallsalzen durch Umsetzung mit einem reaktiven Triphenylmethyldeivat der allgemeinen Formel

T - X

III, in der

T wie in Formel I definiert ist und

X eine reaktive Abgangsgruppe, wie Chlor, Brom oder Jod, bedeutet,

in einem inerten organischen Lösungsmittel oder Lösungsmittelgemisch bei Temperaturen von Raumtemperatur bis zur Siedetemperatur des Lösungsmittels oder der niedrigstsiedenden Lösungsmittelkomponente des Lösungsmittelgemisches am Sauerstoff in der Position 1 des Glycerins trityliert.

Als Tritylierungsmittel wird beim erfindungsgemäßen Verfahren ein reaktives Triphenylmethylderivat, vorzugsweise Triphenylmethylchlorid oder Triphenylmethylbromid, besonders bevorzugt Triphenylmethylchlorid, verwendet. Zur Herstellung der 1-O-Triphenylmethylderivate der allgemeinen Formel I wird ein Moläquivalent des Tritylierungsmittels verbraucht. Es ist nicht unbedingt notwendig, jedoch zur Beschleunigung des Reaktionsverlaufs und zur Vervollständigung der Reaktion in vielen Fällen zweckmäßig, einen Überschuß des Tritylierungsmittels einzusetzen. Dabei kann die eingesetzte Menge des Tritylierungsmittels in weiten Grenzen beliebig variiert werden. Besonders bewährt hat sich die Verwendung eines geringen bis mehrfachen molaren Überschusses an Tritylierungsmittel pro Mol des Ausgangsmaterials der Formel II, wobei ein 1,5- bis 3-facher molarer Überschuß besonders bevorzugt ist.

Die Umsetzung der Verbindung der Formel II mit jener der Formel III erfolgt zweckmäßigerweise in Gegenwart eines Überschusses eines geeigneten Protonenakzeptors. Als Protonenakzeptoren kommen anorganische oder organische Basen in Betracht. Besonders bevorzugt wird die Umsetzung in Gegenwart von organischen Basen, wie tertiären Aminen, beispielsweise Trimethylamin, Triethylamin, N-Methylpiperidin, N,N-Dimethylanilin, N,N-Diethylanilin, Hünig-Base oder heterocyclischen Basen, beispielsweise Pyridin, 4-N,N-Dimethylaminopyridin, 4-Pyrrolidino-pyridin, Picolinen, Kollidin, Chinolin, Isochinolin und dergleichen, durchgeführt.

Die Umsetzung wird in organischen Lösungsmitteln oder Lösungsmittelgemischen durchgeführt, die gegenüber den jeweiligen Reaktionspartnern inert sind. Als Lösungsmittel kommen vor allem aprotische, polare Solventien in Frage. Hierzu gehören vorzugsweise Dimethylsulfoxid, Carbonsäureamide, wie Dimethylformamid, Dimethylacetamid, Hexamethylphosphorsäuretriamid, N-Methylpyrrolidon, Nitrile, wie Acetonitril, Propionitril, heterocyclische Basen, wie Pyridin, Chinolin, Picoline oder Gemische solcher Lösungsmittel. In vielen Fällen kann es vorteilhaft sein, die Umsetzung in einem Lösungsmittelgemisch aus einem inerten aprotischen polaren und einem inerten aprotischen Lösungsmittel geringerer Polarität durchzuführen. Für solche Lösungsmittelgemische eignen sich als Lösungsmittelkomponente mit geringerer Polarität beispielsweise aliphatische oder aromatische Kohlenwasserstoffe, wie niedrig- oder hochsiedender Petroläther, Hexan, Heptan, Benzol, Toluol und dergleichen, halogenierte aliphatische oder aromatische Kohlenwasserstoffe wie Methylenchlorid, Chloroform, 1,2-Dichlorethan, Tetrachlorkohlenstoff, Chlorbenzol, p-Chlortoluol und dergleichen.

Die Reaktionstemperaturen können in einem weiten Bereich variiert werden. Im allgemeinen arbeitet man bei Temperaturen zwischen Raumtemperatur und der Siedetemperatur des jeweils eingesetzten Lösungsmittels oder der niedrigst siedenden Lösungsmittelkomponente des verwendeten Lösungsmittelgemisches, vorzugsweise bei Temperaturen zwischen 20°C und 200°C, insbesondere bei Temperaturen zwischen 20 und 80°C.

Zur Herstellung der Verbindungen der allgemeinen Formel I kann man entweder von den Verbindungen der allgemeinen Formel II als solchen, von deren Salzen mit anorganischen oder organischen Säuren oder Basen oder von deren Komplexen mit Metallsalzen ausgehen. Insbesondere bei der Herstellung des 1-O-Trityl-sn-glycero-3-phosphocholins kann es in vielen Fällen vorteilhaft sein, die stabileren und besser lagerungsfähigen Metallsalzkomplexe, beispielsweise das Cadmiumchlorid-Addukt des sn-Glycero-3-phosphocholins einzusetzen.

Die Aufarbeitung erfolgt zweckmäßigerweise durch Eindampfen der Reaktionslösung oder Ausfällen der Produkte aus der Reaktionslösung durch Verdünnen mit Lösungsmitteln, in denen die Verbindungen der allgemeinen Formel I schwer löslich sind. Die durch übliche chemische Aufarbeitungsmethoden erhaltenen

Rohprodukte sind als Zwischenverbindungen für die Herstellung von gemischt substituierten Phosphatidylcholinen und Phosphatidylethanolaminen ohne weitere Reinigungsoperationen sehr gut geeignet. Zur Reindarstellung der Verbindungen der allgemeinen Formel I eignen sich vor allem die üblichen chromatographischen Methoden, wie präparative Dünnschicht-, Säulen-, Adsorptions-, Mitteldruck- oder Hochdruckflüssigkeitschromatographie.

Ein weiterer Gegenstand der Erfindung betrifft die Verwendung der neuen Verbindungen der allgemeinen Formel I zur Herstellung von enantiomerenreinen Phosphatidylcholinen und Phosphatidylethanolaminen, welche in den Positionen 1 und 2 des Glycerins unabhängig voneinander verschiedene Acylreste tragen.

Vorzugsweise können unter Verwendung der Verbindungen der allgemeinen Formel I gemischt substituierte 1,2-Diacyl-sn-glycero-3-phosphocholine und 1,2-Diacyl-sn-glycero-3-phosphoethanolamine der allgemeinen Formel

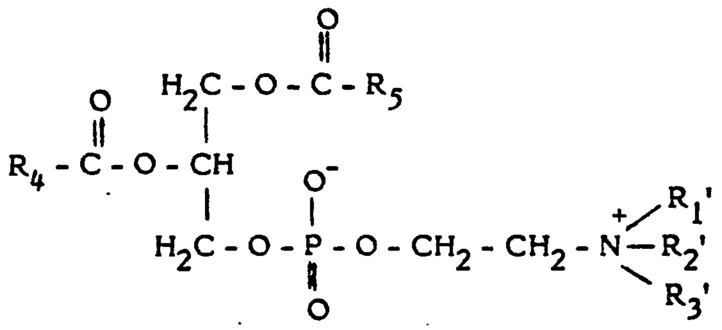

IV, in der

| | |
|---|---|
| $R_1'$, $R_2'$, $R_3'$ | gleich sind und jeweils entweder 3 Wasserstoffatome oder 3 Methylgruppen, |
| $R_4$ und $R_5$ | verschieden sind und unabhängig voneinander einen unsubstituierten oder durch Halogen oder Alkoxy ein- oder mehrfach substituierten, geradkettigen oder verzweigten $C_1$ bis $C_{24}$-Alkyl- oder geradkettigen oder verzweigten, ein- oder mehrfach ungesättigten $C_3$ bis $C_{24}$-Alkenylrest bedeuten, hergestellt werden. |

Hierzu wird eine Verbindung der allgemeinen Formel I mit einem acylierend wirkenden Derivat einer Carbonsäure der allgemeinen Formel $R_4COOH$ zu einer Verbindung der allgemeinen Formel

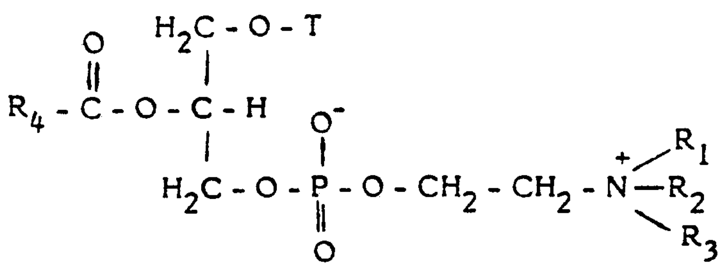

V,
wobei
T, $R_1$, $R_2$, $R_3$ wie in Formel I definiert sind und
$R_4$ die in Formel IV angegebene Bedeutung hat, acyliert,
worauf aus einer erhaltenen Verbindung der allgemeinen Formel V durch Einwirkung von Säuren mit der Maßgabe, daß bei Verbindungen der Formel V, in denen einer der Reste $R_1$, $R_2$ und $R_3$ eine Triphenylmethylgruppe bedeutet, die Säure eine Lewis-Säure ist, die 1-O-Triphenylmethylgruppe unter Bildung eines 2-Acyl-sn-glycero-3-phosphocholins oder 2-Acyl-sn-glycero-3-phospho-(N-triphenylmethyl)-ethanolamins der allgemeinen Formel

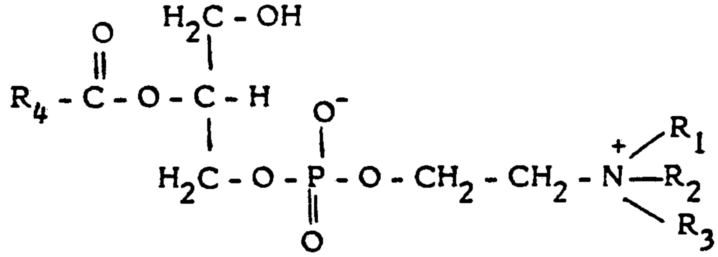

VI, in der
$R_1$, $R_2$, $R_3$ und $R_4$ die oben angegebene Bedeutung haben, abgespalten und die Verbindung der allgemeinen

Formel VI durch Umsetzung mit einem acylierend wirkenden Derivat einer Carbonsäure der allgemeinen Formel $R_5COOH$ zu einem 1,2-Diacyl-sn-glycero-3-phosphocholin oder 1,2-Diacyl-sn-glycero-3-phospho-(N-triphenylmethyl)-ethanolamin der allgemeinen Formel

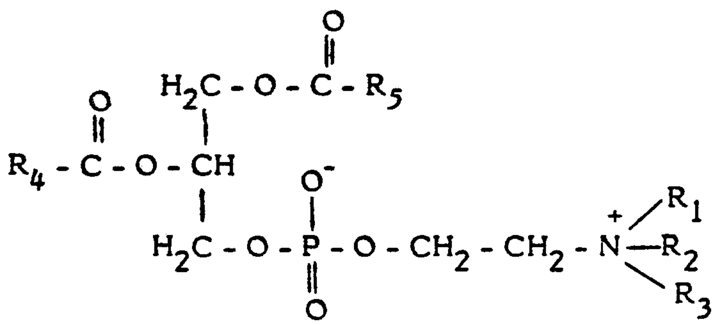

IVa, in der
$R_1$, $R_2$, $R_3$ wie in Formel I definiert sind,
$R_4$ und $R_5$ die in Formel IV angegebene Bedeutung haben, weiteracyliert wird, wonach eine erhaltene Verbindung der allgemeinen Formel IVa, in der einer der Reste $R_1$ bis $R_3$ eine Triphenylmethylgruppe bedeutet, durch Einwirkung von Säuren in aprotischen Lösungsmitteln in eine Verbindung der allgemeinen Formel IV, in der die Reste $R_1'$, $R_2'$ und $R_3'$ Wasserstoff bedeuten, übergeführt wird.

Bei den in der vorliegenden Beschreibung für $R_4$ und $R_5$ angegebenen Definitionen ist unter einem "geradkettigen oder verzweigten Alkylrest" ein gesättigter aliphatischer Kohlenwasserstoffrest zu verstehen, der 1 bis 24 Kohlenstoffatome aufweist und beliebig oft verzweigt sein kann. Der Ausdruck "geradkettiger oder verzweigter, ein- oder mehrfach ungesättigter Alkenylrest" steht für einen ungesättigten, aliphatischen Kohlenwasserstoffrest mit 3 bis 24 Kohlenstoffatomen, der eine oder mehrere olefinische Doppelbindungen aufweist und ebenso beliebig oft verzweigt sein kann. Sowohl in den Alkyl-als auch Alkenylresten können ein oder mehrere Wasserstoffatome durch Halogen, wie Fluor, Chlor, Brom, Jod oder durch Alkoxyreste, wie Methoxy, Ethoxy, Propyloxy, Isopropyloxy, Butyloxy und dergleichen ersetzt sein.

Die Acylierung von Verbindungen der allgemeinen Formel I zu den 2-Acylderivaten der allgemeinen Formel V erfolgt mit reaktiven Carbonsäurederivaten von Carbonsäuren der allgemeinen Formel $R_4COOH$. Als solche Acylierungsmittel eignen sich beispielsweise Halogenide, Anhydride, aktive Ester oder Azolide dieser Carbonsäuren, wobei Carbonsäureimidazolide besonders bevorzugt sind. Die Umsetzung erfolgt unter den üblichen Acylierungsbedingungen, beispielsweise in wasserfreien, polaren aprotischen Lösungsmitteln oder Lösungsmittelgemischen, die gegenüber den jeweiligen Reaktionspartnern inert sind. Hierzu gehören vorzugsweise Ether, wie Tetrahydrofuran, Dioxan, Ethylenglykoldimethylether, halogenierte aliphatische oder aromatische Kohlenwasserstoffe, wie Methylenchlorid, Chloroform, 1,2-Dichlorethan, Chlorbenzol, p-Chlortoluol, Carbonsäureamide wie Dimethylformamid, Dimethylacetamid, Hexamethylphosphorsäuretriamid, N-Methylpyrrolidon, Dimethylsulfoxid, heterocyclische Basen die zugleich als Protonenakzeptoren wirken, wie Pyridin, alkylierte Pyridine, N,N-Dialkylaminopyridine und dergleichen, oder Gemische dieser Lösungsmittel. Bei der Verwendung von Carbonsäureimidazoliden als Acylierungsmittel haben sich Gemische aus Dimethylsulfoxid und Tetrahydrofuran im Verhältnis von 1 : 4 bis 4 : 1 besonders bewährt. Die Acylierung erfolgt zweckmäßigerweise unter Verwendung eines gleichzeitig katalytisch wirkenden Säurebindemittels anorganischer Natur wie Natriumhydrid, metallischem Natrium und dergleichen oder organischer Natur, wie Triethylamin, N-Methylpiperidin, N,N-Dimethylanilin, N,N-Diethylanilin oder in Gegenwart von heterocyclischen Basen, wie Pyridin, N,N-Dimethylaminopyridin, Picolinen, Kollidin, Chinolin, Isochinolin und dergleichen. Die Acylierungsreaktion kann bei Temperaturen zwischen 0°C und dem Siedepunkt des Lösungsmittels, vorzugsweise aber bei Temperaturen zwischen 20°C und 30°C vorgenommen werden.

Die bei der Reaktion entstehenden nicht umgesetzten Carbonsäuren und gegebenenfalls noch vorhandene nicht umgesetzte Reste von Acylierungsmitteln müssen vor dem folgenden Reaktionsschritt abgetrennt werden, beispielsweise durch Chromatographie an Kieselgel oder durch andere in der präparativen Chemie übliche Reinigungsverfahren, wie durch Extraktion einer Lösung des Rohproduktes in mit Wasser nicht mischbaren Lösungsmitteln mit verdünnten wäßrigen Basen, beispielsweise wäßrigem Ammoniak, oder durch Umkristallisieren bzw. Umfällen des Rohprodukts aus geeigneten Lösungsmitteln.

Aus den 2-Acylderivaten der allgemeinen Formel V wird anschließend durch Säurebehandlung die 1-O-Triphenylmethylgruppe abgespalten. Bei den Glycerophosphoethanolaminderivaten der allgemeinen Formel V, bei denen einer der Reste $R_1$, $R_2$ und $R_3$ einen Triphenylmethylrest bedeutet, ist es zur Erhaltung der N-Triphenylmethylgruppe erforderlich und bei den Glycerophosphocholinderivaten der Formel V, bei denen die Reste $R_1$, $R_2$ und $R_3$ jeweils Methyl bedeuten, ist es vorteilhaft, zur Abspaltung der 1-O-Triphenylmethylgruppe eine Lewis-Säure zu verwenden. Die Abspaltung der 1-O-Triphenylmethylgruppe kann bei den Glycerophosphocholinderivaten indessen auch mit anorganischen Säuren, beispielsweise Mineralsäuren, wie Halogenwasserstoffsäure, Bromwasserstoffsäure, Perchlorsäure und dergleichen oder mit organischen Säuren, wie Trifluoressigsäure oder Trichloressigsäure und dergleichen erfolgen. Zur Verhinderung einer

Acylwanderung werden dabei vorteilhafterweise Temperaturen unterhalb von 20°C eingehalten. Als besonders wirksames Detritylierungsmittel wird der Bortrifluorid-Methanol-Komplex in Methylenchlorid bei 0°C eingesetzt. Die Verbindungen der allgemeinen Formel VI werden dabei in so guter Reinheit erhalten, daß sie vor der Weiterverarbeitung keiner weiteren Reinigungsoperation unterzogen werden müssen. Die Ausführungsform der Synthese, bei der die nach Abspaltung der 1-O-Triphenylmethylgruppe erhaltenen Verbindungen der allgemeinen Formel VI direkt der Weiteracylierung zugeführt werden, ist besonders vorteilhaft, da dadurch bei Reinigungsoperationen gegebenenfalls auftretende Acylwanderungen in diesem Stadium des Syntheseverlaufs entscheidend reduziert werden.

Die Weiteracylierung von Verbindungen der allgemeinen Formel VI zu den 1,2-Diacylderivaten der allgemeinen Formel IVa erfolgt wiederum mit einem der oben angegebenen reaktiven Carbonsäurederivate von Säuren der allgemeinen Formel $R_5COOH$. Zur Einführung des Acylrestes in der Position 1 des Glycerins haben sich hier besonders Carbonsäureanhydride dieser Säuren bewährt. Die Umsetzung erfolgt unter den üblichen Acylierungsbedingungen vorteilhafterweise in wasserfreien, polaren aprotischen Lösungsmiteln oder Lösungsmittelgemischen, wobei neben den oben bei der Acylierung der 2-Stellung angegebenen Lösungsmitteln auch Lösungsmittelgemische mit halogenierten Kohlenwasserstoffen, wie Methylenchlorid, Chloroform, Tetrachlorkohlenstoff, Chlorbenzol und dergleichen in Frage kommen. Besonders bewährt haben sich Gemische von Methylenchlorid und 4-N,N-Dimethylaminopyridin, welches zugleich die Funktion eines Säurebindemittels übernimmt. Für die Umsetzung kann ein Temperaturbereich von Raumtemperatur bis zur Siedetemperatur des Lösungsmittels oder der niedrigst siedenden Lösungsmittelkomponente gewählt werden. Vorzugsweise wird die Reaktion bei Raumtemperatur oder leicht erhöhten Temperaturen von 20 bis 40°C durchgeführt.

Die gebildeten Diacylderivate der allgemeinen Formel IVa können mit den in der präparativen Chemie üblichen Reinigungsoperationen in reiner Form erhalten werden. So können die Rohprodukte beispielsweise in mit Wasser nicht mischbaren Lösungsmitteln gelöst und durch Extraktion mit verdünnten wäßrigen Basen, beispielsweise mit wäßrigem Ammoniak, von überschüssigen Acylierungsmitteln befreit werden oder durch Umkristallisieren bzw. Umfällen gereinigt werden.

Daneben eignen sich auch die üblichen chromatographischen Methoden oder multiplikative Verteilung zwischen zwei Phasen zur Reindarstellung der Verbindungen der Formel IVa.

Aus Verbindungen der allgemeinen Formel IVa, in denen einer der Reste $R_1$, $R_2$ und $R_3$ eine Triphenylmethylgruppe bedeutet, können die 1,2-Diacyl-sn-glycero-3-phosphoethanolamine der Formel IV, worin $R_1'$, $R_2'$ und $R_3'$ jeweils Wasserstoff bedeutet, durch Abspaltung des N-Triphenylmethylrestes erhalten werden. Zur Abspaltung eignen sich anorganische Säuren, beispielsweise Mineralsäuren wie Chlorwasserstoff oder Bromwasserstoff oder bevorzugt organische Säuren, beispielsweise halogenierte Carbonsäuren, wie Trichlor- oder Trifluoressigsäure, wobei zur Vermeidung einer Entacylierung in den Positionen 1 und 2 des Glycerins in aprotischen Lösungsmitteln gearbeitet wird. Vorzugsweise wird der N-Triphenylmethylrest mit Trifluoressigsäure in Methylenchlorid bei Temperaturen um 0°C entfernt.

Die Charakterisierung und Reinheitsprüfung der hier beschriebenen Verbindungen erfolgte mittels Dünnschichtchromatographie und spektroskopischen Methoden, insbesondere $^1$H-NMR-Spektroskopie. Die ermittelten spektroskopischen Daten stehen im Einklang mit den beschriebenen chemischen Strukturen der Verbindungen.

Die Verbindungen der allgemeinen Formel I sind neue, zentrale Zwischenprodukte für die universelle chemische Synthese von gemischt substituierten 1,2-Diacyl-sn-glycero-3-phosphocholinen und 1,2-Diacyl-sn-glycero-3-phosphoethanolaminen der allgemeinen Formel IV. Da bei der Verwendung von Zwischenprodukten der allgemeinen Formel I der Einsatz von Enzymen, die bisher bei der semisynthetischen Herstellung solcher gemischt substituierter Phosphatidylcholine und Phosphatidylethanolamine eingesetzt werden mußten, nicht mehr erforderlich ist, sind die Verbindungen der allgemeinen Formel IV auch in technischem Maßstab leicht zugänglich. Weitere Vorteile dieser Erfindung liegen darin, daß die zur Acylierung in Position 1 beziehungsweise in Position 2 eingesetzten Carbonsäurederivate praktisch vollständig verwertet werden. Bei den bisher verwendeten enzymatischen Verfahren werden die Positionen 1 und 2 im Glycerophosphocholin beziehungsweise in N-geschützten Glycerophosphoethanolaminen zuerst mit zwei gleichen Acylresten substituiert, worauf der Acylrest in Position 2 durch Einwirkung von Phospholipase $A_2$ abgespalten und an diesem Zwischenprodukt durch eine weitere Acylierungsreaktion der gewünschte Acylrest eingeführt wird. Dabei geht die für die Erstacylierung in Position 2 verwendete Carbonsäure verloren. Weiters ist die Geschwindigkeit und Effizienz der enzymatischen Hydrolyse von der Art der Carbonsäure abhängig, während die erfindungsgemäße Herstellung der Verbindungen der Formel IV davon vollständig unabhängig ist.

Die Phosphatidylcholine und Phosphatidylethanolamine der allgemeinen Formel IV können beispielsweise als wertvolle Emulgatoren bei der Herstellung von Arzneimitteln und Pflanzenschutzmitteln oder in der Photoindustrie verwendet werden. Weiters eignen sich diese Verbindungen als chemisch definierte Ausgangsmaterialien für die Herstellung von Liposomen, Liposomenlösungen und Liposomengelen.

Als Ausgangsmaterialien für die Herstellung der Verbindungen der allgemeinen Formel I werden sn-Glycero-3-phosphocholin oder sn-Glycero-3-phosphor-(N-triphenylmethyl)-ethanolamin verwendet. Das sn-Glycero-3-phosphocholin kann nach bekannten Verfahren, beispielsweise durch alkalische Hydrolyse aus natürlichem Lecithin, in praktisch unbeschränkten Mengen auf einfache Weise hergestellt werden. Bevorzugt werden kommerziell erhältliche Produkte verwendet.

Die sn-Glycero-3-phospho-(N-triphenylmethyl)-ethanolamine sind durch N-Tritylierung von sn-Glycero-3-phosphoethanolamin beliebiger Herkunft leicht zugänglich. Auf besonders vorteilhafte und einfach Weise wird sn-Glycero-3-phospho-(N-triphenylmethyl)-ethanolamin durch Tritylierung von Phosphatidylethanolamin in einem Gemisch von Phospholipiden pflanzlichen, tierischen oder mikrobiellen Ursprungs mit einem reaktiven, substituierten oder unsubstituierten Triphenylmethylderivat, vorzugsweise Triphenylmethylbromid, und anschließender Verseifung der Gesamtlipide hergestellt. Aus diesem Gemisch kann das sn-Glycero-3-phospho-(N-triphenylmethyl)-ethanolamin durch Extraktion mit Lösungsmitteln, die mit Wasser nicht mischbar sind, vorzugsweise mit Chloroform in Anwesenheit von Methanol, von wasserlöslichen Spaltprodukten abgetrennt und dann durch Auswaschen der Fettsäuren mit alkalischer Wasserphase, gegebenenfalls unter Beimischung von Methanol, in reiner Form erhalten werden. Zur Herstellung von sn-Glycero-3-phospho-(N-triphenylmethyl)-ethanolamin kann man beispielsweise folgendermaßen vorgehen:

1,5 g Soyaphospholipide und 1,4 g Triphenylmethylbromid werden in 50 ml Chloroform gelöst. Nach Zugabe von 1,1 g Triäthylamin wird das Reaktionsgemisch 12 h bei 20°C gerührt. Hierauf gibt man 50 ml Chloroform und 100 ml einer 0,5 N Natriumhydroxidlösung in Methanol zu und läßt 30 min bei 20°C rühren. Dann setzt man 100 ml Chloroform zu, trennt die organische Phase ab und wäscht diese dreimal mit alkalischer Wasserphase aus. Schließlich zieht man das organische Lösungsmittel im Vakuum ab. Der Rückstand, der das sn-Glycero-3-phospho-(N-triphenylmethyl)-ethanolamin enthält, kann direkt für die anschließende 0-Tritylierung verwendet werden. Die reine Verbindung, die man durch Chromatographie des Rohprodukts an Kieselgel mit einem Chloroform-Methanol-Gradienten erhält, zeigt bei der Dünnschichtchromatographie an Kieselgel (Laufmittel: Chloroform-Methanol-25 % $NH_3$ 50 : 25 : 6 (v/v/v) einen einheitlichen Spot, $R_f$ 0,3.

Die nachfolgenden Beispiele dienen zur näheren Erläuterung der Erfindung, ohne dieselben zu beschränken.

a) Herstellung von Verbindungen der allgemeinen Formel I

**Beispiel 1:**

<u>1-O-Triphenylmethyl-sn-glycero-3-phosphocholin</u>

5 g sn-Glycero-3-phosphocholin-$CdCl_2$-Komplex und 4,6 g Triphenylmethylchlorid werden bei 70°C in wasserfreiem Dimethylformamid (50 ml) gelöst. Nach Zugabe von 2.3 ml Triethylamin wird 30 min bei 70°C unter Feuchtigkeitsausschluß gerührt. Nach dem Erkalten des Reaktionsgemisches wird 5 g gepulvertes $NaHCO_3$ zugegeben und 20 min bei Raumtemperatur gerührt. Dann wird die Reaktionslösung filtriert und mit 300 ml Diethylether versetzt. Das gebildete Öl wird abzentrifugiert, einmal mit Diethylether gewaschen und schließlich in 150 ml Methanol gelöst. Nach Zugabe von 300 ml $CHCl_3$ wird mit 90 ml eines Lösungsmittelgemisches (Oberphase) aus $CHCl_3$ - $CH_3OH$ - $H_2O$ 3/48/47/(v/v/v) gewaschen und die Unterphase mit 150 ml $CHCl_3$ - $CH_3OH$ 2/1 (v/v) verdünnt. Hierauf wird mit 3 ml 25 % wässeriger $NH_3$-Lösung versetzt, 15 min bei Raumtemperatur stehengelassen und schließlich vom gebildeten farblosen Niederschlag abzentrifugiert. Nach dem Abziehen des Lösungsmittels im Vakuum wird der Ölige Rückstand dreimal mit je 50 ml Diethylether digeriert. Dabei wird ein gelbliches festes Rohprodukt (5,5 g) erhalten, das dünnschichtchromatographisch auf Kieselgel (Laufmittel: $CHCl_3$ - $CH_3OH$ - 25 % $NH_3$ 65/35/5, v/v/v) einen $R_f$ -Wert von 0,15 zeigt und nur sehr geringe Mengen an Verunreinigungen aufweist. Die reine Verbindung wird durch Mitteldurckchromatographie an Kieselgel erhalten. Für die Elution wird ein $CHCl_3$ - $CH_3OH$-Gradient verwendet, wobei das Elutionsmittel 0,5 Volumsprozente 25 % wässerige $NH_3$-Lösung enthält. Die Reinsubstanz zeigt bei der Dünnschichtchromatographie auf Kieselgel (Laufmittel wie bei der Analyse des Rohprodukts) einen einheitlichen Spot, $R_f$ 0,15.

$^1$H-NMR-Spektrum: δ ppm

3.1 (N - $CH_3$); 3.3 - 4.3 (Cholin und Glycerol); 7.25 (Triphenylmethyl C-H).

**Beispiel 2:**

<u>1-O-Triphenylmethyl-sn-glycero-3-phospho-(N-triphenylmethyl)-ethanolamin</u>

964 mg sn-Glycero-3-phospho-(N-triphenylmethyl)-ethanolamin und 1,735 g Triphenylmethylchlorid werden in 32 ml wasserfreiem Pyridin unter Feuchtigkeitsausschluß 48 Stunden bei Raumtemperatur gerührt. Anschließend wird auf Eiswasser gegossen. Das Produkt wird mit drei Portionen Diethylether extrahiert. Die vereinigten Etherphasen werden zweimal mit Wasser gewaschen und anschließend über $Na_2SO_4$ getrocknet. Nach dem Abziehen des Lösungsmittels im Vakuum wird restliches Pyridin durch Abdampfen des Rückstandes in Gegenwart von Toluol im Vakuum entfernt. Der Rückstand wird in 30 ml Chloroform-Methanol 1/1 (v/v) aufgenommen und über Nacht bei 4°C stehengelassen. Nach dem Abfiltrieren des ausgefallenen Triphenylmethylcarbinols und darauffolgendem Abziehen des Lösungsmittelgemisches erhält man 1,7 g des

Rohprodukts, welches direkt für die folgende Acylierung eingesetzt wird. Nach Chromatographie an Kieselgel mit einem Chloroform-Methanol-Gradienten erhält man die reine Verbindung, die dünnschichtchromatographisch auf Kieselgel (Laufmittel: Chloroform-Methanol 6 : 4 (v/v) einen einheitlichen Spot, $R_f$ 0,6, zeigt.

$^1$H-NMR-Spektrum: δ ppm (DMSO-$d_6$)

3,5 - 4,3 (Glycerol und Ethanolamin C-H, unscharf); 7,25 (Triphenylmethyl C-H, m).

**Beispiel 3:**

Unter Anwendung der in Beispiel 1 angegebenen Arbeitsvorschrift wurde folgende Verbindung erhalten:

1-O-(4,4'-Dimethoxytriphenylmethyl)-sn-glycero-3-phosphocholin

Das Dünnschichtchromatogramm auf Kieselgel (Laufmittel: $CHCl_3$, $CH_3OH$, 25-%-ige wässerige $NH_3$; 65, 35, 5 (v/v/v) zeigt einen einheitlichen Spot, $R_f$-Wert 0,15.

$^1$H-NMR-Spektrum: δ ppm ($CD_3OD$)

3.1 (N-$CH_3$); 3.8 (Phenyl-O-$CH_3$); 3.3 - 4.3 (Cholin und Glycerol); 7.23 (Aromat)

**Beispiel 4:**

1-O-(4,4'-Dimethoxytriphenylmethyl)-sn-glycero-3-phospho-(N-triphenylmethyl)-ethanolamin

Eine Lösung von 2,4 g sn-Glycero-3-phospho-(N-triphenylmethyl)-ethanolamin und 4.5 g 4,4'-Dimethoxytriphenylmethylchlorid werden in 80 ml wasserfreiem Pyridin 72 Stunden bei Raumtemperatur gerührt. Nach dem Abziehen des Pyridins im Vakuum wird der Rückstand in 200 ml $CHCl_3$ - $CH_3OH$ 2/1 (v/v) gelöst. Diese Lösung wird zweimal mit je 40 ml $CHCl_3$ - $CH_3OH$ - $H_2O$ 3/48/47 (v/v/v) gewaschen und das Lösungsmittel hierauf im Vakuum abdestilliert. Dabei wird ein braunes Öl erhalten, das nach Digerieren mit 80 ml und 30 ml Portionen von Diethylether 2.5 g des Rohprodukts als amorphes farbloses Pulver liefert. Der Dünnschichtchromatographie auf Kieselgel (Laufmittel: $CHCl_3$ - $CH_3OH$ 6/4, v/v) zufolge enthält das Rohprodukt mehr als 90 % des gesuchten Produkts ($R_f$ 0.6), welches ohne weitere Reinigung für die Herstellung der gemischt substituierten enantiomerenreinen 1,2-Diacyl-sn-glycero-3-phosphoethanolamine verwendet werden kann.

Die reine Verbindung wird durch Mitteldruckchromatographie an Kieselgel mit einem $CHCl_3$- $CH_3OH$-Gradienten (in Gegenwart von 0,5 Vol-% wasserigem $NH_3$) erhalten und zeigt dünnschichtchromatographisch (Bedingungen wie in Beispiel 3) einen einheitlichen Spot, $R_f$ 0.6.

$^1$H-NMR-Spektrum: δ rppm

($CDCl_3$ - $CD_3OD$ 2/1, v/v)

3.1 (N - $CH_3$); 3.8 (Phenyl-O-$CH_3$); 3.3 - 4.3 (Cholin und Glycerol); 7.23 (Aromat).

b) Verwendung der gemäß den obigen Beispielen erhaltenen Verbindungen der allgemeinen Formel I zur Herstellung von Verbindungen der allgemeinen Formel IV

**Beispiel 5:**

A) 1-O-Triphenylmethyl-2-oleoyl-sn-glycero-3-phosphocholin

Man läßt 1,26 g Ölsäure mit 794 mg Carbonyldiimidazol in 25 ml Tetrahydrofuran 45 min bei Raumtemperatur reagieren und entfernt dann das Lösungsmittel im Vakuum. Dann versetzt man den Rückstand, der das gebildete Fettsäureimidazolid enthält, mit einer Lösung von 1,1 g des Rohprodukts von 1-O-Triphenylmethyl-sn-glycero-3-phosphocholin (gemäß Beispiel 1) in 28 ml Dimethylsulfoxid. Nach der Zugabe des Katalysators, der durch Auflösen von 148 mg metallischem Natrium in 11,5 ml Dimethylsulfoxid hergestellt wird, läßt man das Reaktionsgemisch unter gelegentlichem Umschütteln 20 min bei 20°C stehen. Schließlich werden 64 ml einer

0,1 N wässerigen Essigsäure in einem Guß zugegeben. Man extrahiert mit einem Gemisch aus Chloroform-Methanol 2/1 (v/v) zweimal und wäscht die vereinigten organischen Phasen zweimal mit einem Gemisch aus Methanol-$H_2O$ 1/1 (v/v). Nach dem Abdampfen des Lösungsmittels im Vakuum wird das Rohprodukt in Chloroform gelöst und auf eine Kieselgelsäule aufgetragen. Die reine Verbindung (1,1 g) wird mit einem Chloroform-Methanol-Gradienten eluiert und zeigt dünnschichtchromatographisch auf Kieselgel (Laufmittel: Chloroform-Methanol-25 % $NH_3$ 65 : 35 : 5 (v/v/v)) einen einheitlichen Spot, $R_f$ 0,4.

B) 2-Oleoyl-sn-glycero-3-phosphocholin

Eine Lösung von 500 mg 1-O-Triphenylmethyl-2-oleoyl-sn-glycero-3-phosphocholin in 30 ml Methylenchlorid wird mit 0,5 ml einer 20 % Lösung von Bortrifluorid in Methanol versetzt und hierauf 30 min bei 0°C gerührt. Anschließend setzt man 15 ml Methanol und 9 ml Wasser zu, schüttelt aus und isoliert die organische Phase. Das Lösungsmittel wird durch Abziehen im Hochvakuum bei Raumtemperatur entfernt.

C) 1-Palmitoyl-2-oleoyl-sn-glycero-3-phosphocholin

Der Rückstand, der das gebildete 2-Oleoyl-sn-glycero-3-phosphocholin enthält, wird in 30 ml trockenem Chloroform gelöst. Dann setzt man dieser Lösung 820 mg Palmitinsäureanhydrid und 200 mg Dimethylaminopyridin zu und rührt das Reaktionsgemisch 6 Stunden bei 20°C. Hierauf gibt man 15 ml Methanol zu und schüttelt zuerst mit 0,1 N HCl und dann mit $H_2O$ aus. Nach dem Abziehen des organischen Lösungsmittels im Vakuum wird die Substanz durch Chromatographie an Kieselgel mit einem Chloroform-Methanol-Gradienten gereinigt. Die gereinigte Verbindung (400 mg) zeigt bei der Dünnschichtchromatographie auf Kieselgel (Laufmittel: Chloroform-Methanol-25 % $NH_3$ 65 : 35 : 5 (v/v/v)) einen einheitlichen Spot, $R_f$ 0,4.

**Beispiel 6:**

1-Stearoyl-2-oleoyl-sn-glycero-3-phosphocholin

Eine Lösung von 2-Oleoyl-sn-glycero-3-phosphocholin (erhalten aus 700 mg 1-O-Triphenylmethyl-2-oleoyl-sn-glycero-3-phosphocholin gemäß Beispiel 5, Stufen A und B) wird mit 1,2 g Stearinsäureanhydrid nach der in Beispiel 5, Stufe C, angegebenen Arbeitsvorschrift umgesetzt, chromatographisch gereinigt, und analysiert. Man erhält 550 mg (76 % Ausbeute, bezogen auf 1-O-Triphenylmethyl-sn-glycero-3-phosphocholin) 1-Stearoyl-2-oleoyl-sn-glycero-3-phosphocholin, welches im Dünnschichtchromatogramm auf Kieselgel (Laufmittel: Chloroform-Methanol-25-%-ige wäßrige $NH_3$ Lösung, 65 : 35 : 5, v/v/v) einen einheitlichen Spot zeigt; $R_f$-Wert 0.4.

**Beispiel 7:**

A) 1-O-Triphenylmethyl-2-linoleoyl-sn-glycero-3-phosphocholin

600 mg 1-O-Triphenylmethyl-sn-glycero-3-phosphocholin (gemäß Beispiel 1) werden mit Linoleoylimidazolid, welches aus 690 mg Linolsäure und 440 mg Carbonyldiimidazol hergestellt wurde, werden nach der in Beispiel 5, Stufe A, angegebenen Arbeitsvorschrift acyliert. Nach Mitteldruckchromatographie an Kieselgel zeigt die reine Verbindung (690 mg, Ausbeute 75 % der Theorie) im Dünnschichtchromatogramm auf Kieselgel einen einheitlichen Spot, $R_f$-Wert 0.3 (Laufmittel Chlorform-Methanol-25 %-ige wäßrige $NH_3$ Lösung, 65 : 35 : 5 v/v/v)

B) 2-Linoleoyl-sn-glycero-3-phosphocholin

Eine Lösung von 1 g 1-O-Triphenylmethyl-2-linoleoyl-sn-glycero-3-phosphocholin in 60 ml Methylenchlorid wird zur Abspaltung des 1-O-Triphenylmethylrestes, wie in Beispiel 5, Stufe B angegeben, mit einer 20 % Lösung von Bortrifluorid in Methanol behandelt.

C) 1-Stearoyl-2-linoleoyl-sn-glycero-3-phosphocholin

Das in Stufe B erhaltene 2-Lineoyl-sn-glycero-3-phosphocholin wird mit 1,6 g Stearinsäureanhydrid nach der in Beispiel 5, Stufe C, angegebenen Arbeitsvorschrift umgesetzt und chromatographisch gereinigt. Man erhält 820 mg (80 % Ausbeute, bezogen auf 1-O-Triphenylmethyl-2-linoleoyl-sn-glycero-3-phosphocholin), reines Produkt welches im Dünnschichtchromatogramm auf Kieselgel (Laufmittel Chloroform-Methanol-25 %-ige wäßrige $NH_3$ Lösung, 65 : 35 : 5, v/v/v) einem einheitlichen Spot zeigt; $R_f$-Wert 0.7.

**Beispiel 8:**

A) 1-O-Triphenylmethyl-2-acetyl-sn-glycero-3-phosphocholin

320 mg 1-O-Triphenylmethyl-sn-glycero-3-phosphocholin (gemäß Beispiel 1) werden mit 0.7 mg Acetanhydrid in 4 ml wasserfreiem Pyridin über Nacht bei Raumtemperatur umgesetzt. Das Reaktionsgemisch wird dann auf Eiswasser gegossen und zweimal mit Chloroform-Methanol (2 : 1, v/v) extrahiert. Die vereinigten organischen Phasen werden zweimal mit Chloroform-Methanol-Wasser (3 : 48 : 47, v/v/v) gewaschen, über Natriumbicarbonat getrocknet und schließlich zur Trockene gebracht. Das Rohprodukt wird durch Mitteldruckchromatographie an Kieselgel mit einem Chloroform-Methanol-Gradienten gereinigt. Das reine Produkt (180 mg, 31 % Ausbeute) zeigt im Dünnschichtchromatogramm auf Kieselgel (Laufmittel: Chloroform-Methanol-25 %-ige wäßrige $NH_3$ Lösung, 65 : 35 : 5, v/v/v) einen einheitlichen Spot; $R_f$ 0.16.

$^1$H-NMR-Spektrum δ ppm ($CDCl_3$ - $CD_3OD$, 2 : 1, v/v)

2.13 ($H_3C$ - CO, s, 3H); 3,16 ($H_3C$ - N, s, 9H); 3.3 - 4.4 (Glycerol und Cholin - $CH_2$); 5.23 (Glycerol C-H, 1H); 7.33 (Aromat, 15H)

B) 2-Acetyl-sn-glycero-3-phosphocholin

C) 1-Palmitoyl-2-acetyl-sn-glycero-3-phosphocholin

Aus dem 1-O-Triphenylmethyl-2-acetyl-sn-glycero-3-phosphocholin wurde die 1-O-Triphenylmethylgruppe nach der in Beispiel 5, Stufe B, angegebenen Arbeitsvorschrift abgespalten und das gebildete 2-Acetyl-sn-glycero-3-phosphocholin mit Palmitinsäureanhydrid nach der in Beispiel 5, Stufe C, angegebenen Arbeitsvorschrift zu 1-Palmitoyl-2-acetyl-sn-glycero-3-phosphocholin umgesetzt.

**Beispiel 9:**

A) 1-O-Triphenylmethyl-2-methoxyacetyl-sn-glycero-3-phosphocholin

316 mg 1-O-Triphenylmethyl-sn-glycero-3-phosphocholin (gemäß Beispiel 1), wird mit Methoxyacetylimidazolid, welches aus 90 mg Methoxyessigsäure und 178 mg Carbonyldiimidazol hergestellt wurde, nach der in Beispiel 5, Stufe A, angegebenen Arbeitsmethode umgesetzt und aufgearbeitet. Man erhält 250 mg (69 % Ausbeute) reines 1-O-Triphenylmethyl-2-methoxyacetyl-sn-glycero-3-phosphocholin, welches im Dünnschichtchromatogramm (Laufmittel: Chloroform-Methanol-25 %-ige wäßrige $NH_3$ Lösung, 65 : 35 : 5, v/v/v) einen einheitlichen Spot zeigt; $R_f$-Wert 0.25.

B) 2-Methoxyacetyl-sn-glycero-3-phosphocholin

C) 1-Stearoyl-2-methoxyacetyl-sn-glycero-3-phosphocholin

Aus dem 1-O-Triphenylmethyl-2-methoxyacetyl-sn-glycero-3-phosphocholin wurde die 1-O-Triphenylmethylgruppe nach der in Beispiel 5, Stufe B, angegebenen Arbeitsvorschritt abgespalten und das dabei gebildete 2-Methoxyacetyl-sn-glycero-3-phosphocholin wird wie in Beispiel 6 mit Stearinsäureanhydrid zum 1-Stearoyl-2-methoxyacetyl-sn-glycero-3-phosphocholin umgesetzt und chromatographisch gereinigt.

**Beispiel 10:**

A) 1-O-Triphenylmethyl-2-(2'-ethylhexanoyl)-sn-glycero-3-phosphocholin

Eine Lösung von 250 mg 1-O-Triphenylmethyl-sn-glycero-3-phosphocholin (gemäß Beispiel 1) wird mit 2-Ethylhexanoylimidazolid, welches aus 144 mg 2-Ethylhexansäure und 178 mg Carbonyldiimidazol hergestellt wurde, nach der in Beispiel 5, Stufe A, angegebenen Arbeitsmethode umgesetzt und aufgearbeitet. Man erhält 200 mg (69 % Ausbeute) reines 1-O-Triphenylmethyl-2-(2'-ethylhexanoyl)-sn-glycero-3-phosphocholin, welches im Dünnschichtchromatogramm (Laufmittel: Chloroform-Methanol-25 %-ige $NH_3$,' 65 : 35 : 5, v/v/v) einen einheitlichen Spot zeigt; $R_f$-Wert 0.24.

B) 2-(2'-Ethylhexanoyl)-sn-glycero-3-phosphocholin

C) 1 -Oleoyl-2-(2'-ethylhexanoyl)-sn-glycero-3-phosphocholin

Aus dem 1-O-Triphenylmethyl-2-(2'ethylhexanoyl)-sn-glycero-3-phosphocholin wurde die 1-O-Triophenylmethylgruppe nach der in Beispiel 5, Stufe B, angegebenen Arbeitsvorschrift abgespalten und das dabei gebildete 2-(2'-Ethylhexanoyl)-sn-glycero-3-phosphocholin nach der in Beispiel 5, Stufe C, angegebenen Arbeitsmethode, mit Ölsäureanhydrid zum 1-Oleoyl-2-(2'-ethylhexanoyl)-sn-glycero-3-phosphocholin umgesetzt und chromatographisch gereinigt.

**Beispiel 11:**

A) 1-O-Triphenylmethyl-2-(1'-$^{14}$C)-dodecanoyl-sn-glycero-3-phosphocholin

100 mg (1'-$^{14}$C)-Dodekansäure (1 µci/m Mol) und 90 mg Carbonyldiimidazol werden 45 Minuten in 30 ml wasserfreiem Tetrahydrofuran bei 20°C umgesetzt. Die Lösung des gebildeten Acylimidazolids wird zu 127 mg 1-O-Triphenylmethyl-sn-glycero-3-phosphocholin gegeben. Nach dem Abziehen des Lösungsmittels im Vakuum wird der Rückstand in 1 ml Dimethylsulfoxid gelöst und die Reaktion durch Zugabe des katalytisch wirkenden Säurebindemittels, welches durch Lösen von 23 g metallischem Natrium in 18 ml Dimethylsulfoxid erhalten wurde, eingeleitet. Das Reaktionsgemisch wird unter gelegentlichem Schütteln 10 Minuten bei 20°C gehalten und danach durch Zugabe von 10 ml wäßriger Essigsäure in einem Guß neutralisiert. Dann wird zweimal mit je 15 ml Chloroform-Methanol (2 : 1 v/v) extrahiert. Die vereinigten organischen Phasen werden nacheinander mit je 6 ml Chloroform-Methanol-wäßrige $NH_3$-Lösung (3 : 48 : 47, v/v/v) und Chloroform-Methanol-Wasser (3 : 48 : 47, v/v/v) gewaschen. Nach dem Abziehen des Lösungsmittels im Vakuum und Evaporieren in Gegenwart von Benzol wird das Rohprodukt erhalten, welches durch Mitteldruckchromatographie an Kieselgel mit einem Chloroform-Methanol-Gradienten gereinigt wird, wobei 110 mg Reinsubstanz (82 % Ausbeute) bei einem Chloroform-Methanol-Verhältnis von 6 : 4 (v/v) eluiert werden.

Die Reinsubstanz zeigt im Dünnschichtchromatogramm auf Kieselgel (Laufmittel: Chloroform-Methanol-25 %-ige wäßrige $NH_3$Lösung, 65 : 35 : 5, v/v/v) einen einheitlichen Spot; $R_f$ 0,25. Die Radioaktivität beträgt 1 µci/mMol)

$^1$H-NMR-Spektrum: δ in ppm ($CDCl_3$ - $CD_3OD$, 2 / 1, v/v)

0,90 (Acyl-$CH_3$, 3H); 1.26 ($(CH_2)_n$, s) 16H); 1.66 ($H_2C$-C-CO, m, 2H); 3.16 ($H_3C$ - N, s, 9H); 3.3 - 4.4 (Glycerol und Cholin-$CH_2$, 8H); 5.23 (Glycerol-CH, m, 1H); 7.33 (Aromat, 15 H).

B) 2-(1'-$^{14}$C)-Dodecanoyl-sn-glycero-3-phoshocholin

C) 1 -Oleoyl-2-(1'-$^{14}$C)-dodecanoyl-sn-glycero-3-phosphocholin

Aus dem 1-O-Triphenylmethyl-2-(1'-$^{14}$C)-dodecanoyl-sn-glycero-3-phosphocholin wurde die 1-O-Triphenylmethylgruppe nach der in Beispiel 5, Stufe B, angegebenen Arbeitsvorschrift abgespalten und das dabei gebildete 2-(1'-$^{14}$C)-Dodekanoyl-sn-glycero-3-phosphocholin wie in Beispiel 5, Stufe C, mit Ölsäureanhydrid zum 1-Oleoyl-2-(1'-$^{14}$C)-dodecanoyl-sn-glycero-3-phosphocholin umgesetzt und chromatographisch gereinigt.

**Beispiel 12:**

A) 1-O-Triphenylmethyl-2-(9', 10'-dibromstearoyl)-sn-glycero-3-phosphocholin

300 mg 1-O-Triphenylmethyl-sn-glycero-3-phosphocholin (gemäß Beispiel 1) werden mit 1.3 g 9, 10-Dibromstearinsäureanhydrid, nach der in Beispiel 8, Stufe A, angegebenen Arbeitsmethode in Gegenwart von 300 mg 4-N,N-Dimethylaminopyridin in 20 ml Chloroform, 5 Stunden bei 20°C umgesetzt und aufgearbeitet. Man erhält 460 mg (82 % Ausbeute) reines 1-O-Triphenylmethyl-2-(9', 10'-dibromstearoyl-sn-glycero-3-phosphocholin, welches im Dünnschichtchromatogramm (Laufmittel: Chloroform-Methanol-25 %-ige wäßrige $NH_3$ Lösung, 65 : 35 : 5, v/v/v) einen einheitlichen Spot zeigt; $R_f$-Wert 0,3.

B) 2-(9', 10'-Dibromstearoyl)-sn-glycero-3-phosphocholin

C) 1-Stearoyl-2-(9', 10'-dibrornstearoyl)-sn-glycero-3-phosphocholin

Aus dem 1-O-Triphenylmethyl-2-(9',10'-dibromstearoyl)-sn-glycero-3-phosphocholin wurde die 1-O-Triphenylmethylgruppe nach der in Beispiel 5, Stufe B, angegebenen Arbeitsvorschrift abgespalten und das dabei gebildete 2-(9', 10'-Dibromstearoyl)-sn-glycero-3-phosphocholin wie in Beispiel 6 mit

Stearinsäureanhydrid zum 1-Stearoyl-2-(9',10'-dibromstearoyl)-sn-glycero-3-phosphocholin umgesetzt und chromatographisch gereinigt.

**Beispiel 13:**

A) 1-O-Triphenylmethyl-2-arachidonoyl-sn-glycero-3-phosphocholin

550 mg 1-O-Triphenylmethyl-sn-glycero-3-phosphocholin (gemäß Beispiel 1) wird nach der in Beispiel 12 angegebenen Arbeitsmethode mit 1,50 g Arachidonsäureanhydrid unter Argon-Atmosphäre umgesetzt. Nach Zugabe von 15 ml Methanol wird mit 9 ml Chloroform-Methanol-Wasser (3 : 48 : 47, v/v/v) gewaschen und hierauf die Unterphase im Vakuum zur Trockene gebracht und durch Mitteldruckchromatographie gereinigt.

Man erhält 750 mg (80 % Ausbeute) reines 1-O-Triphenylmethyl-2-arachidonoyl-sn-glycero-3-phospocholin, welches im Dünnschichtchromatogramm (Laufmittel: Chloroform-Methanol-25 %-ige wäßrige $NH_3$ Lösung, 65 : 35 : 5, v/v/v) einen einheitlichen Spot zeigt; $R_f$-Wert 0,3.

B) 2-Arachidonoyl-sn-glycero-3-phosphocholin

C) 1-Stearoyl-2-arachidinoyl-sn-glycero-3-phosphocholin

Aus dem 1-O-Triphenylmethyl-2-arachidonoyl-sn-glycero-3-phosphocholin wurde die 1-O-Triphenylmethylgruppe nach der in Beispiel 5, Stufe B, angegebenen Arbeitsvorschrift abgespalten und das dabei gebildete 2-Arachidonoyl-sn-glycero-3-phosphocholin wie in Beispiel 6 mit Sterinsäureanhydrid zum 1-Stearoyl-2-arachidinoyl-sn-glycero-3-phosphocholin umgesetzt und chromatographisch gereinigt.

**Beispiel 14:**

A) 1-O-Triphenylmethyl-2-tetracosanoyl-sn-glycero-3-phosphocholin

316 mg 1-O-Triphenylmethyl-sn-glycero-3-phosphocholin (gemäß Beispiel 1) wird mit Tetracosanoylimidazolid, welches aus 1,7 g Tetracosansäure und 356 mg Carbonyldiimidazol hergestellt wurde, nach der in Beispiel 5, Stufe A, angegebenen Arbeitsmethode umgesetzt und aufgearbeitet. Man erhält 850 mg (62 % Ausbeute) reines 1-O-Triphenylmethyl-2-tetracosanoyl-sn-glycero-3-phosphocholin, welches im Dünnschichtchromatogramm (Laufmittel: Chloroform-Methanol-25 %-ige wäßrige $NH_3$ Lösung, 65 : 35 : 5, v/v/v) einen einheitlichen Spot zeigt; $R_f$-Wert 0.3.

B) 2-Tetracosanoyl-sn-glycero-3-phosphocholin

C) 1-Oleoyl-2-tetracosanoyl-sn-glycero-3-phosphocholin

Aus dem 1-O-Triphenylmethyl-2-tetracosanoyl-sn-glycero-3-phosphocholin wurde die 1-O-Triphenylmethylgruppe nach der im Beispiel 5, Stufe B, angegebenen Arbeitsvorschrift abgespalten und das dabei gebildete 2-Tetracosanoyl-sn-glycero-3-phosphocholin wie in Beispiel 5, Stufe C, mit Ölsäureanhydrid zum 1-Oleoyl-2-tetracosanoyl-sn-glycero-3-phosphocholin umgesetzt und chromatographisch gereinigt.

**Beispiel 15:**

A) 1-O-Triphenylmethyl-2-oleoyl-sn-glycero-3-phospho-(N-triphenylmethyl)-ethanolamin

386 mg Ölsäure und 255 mg Carbonyldiimidazol werden in 10 ml Tetrahydrofuran 45 min bei Raumtemperatur unter Feuchtigkeitsausschluß gerührt. Nach dem Aufnehmen von 480 mg 1-O-Triphenylmethyl-sn-glycero-3-phospho-(N-triphenylmethyl)-ethanolamin (gemäß Beispiel 2) in der Lösung des Oleoylimidazolids werden 3,1 ml einer Lösung von 41 mg Natriummetall in Dimethylsulfoxid zugegeben. Man läßt 20 min bei Raumtemperaur reagieren und neutralisiert dann mit 17,8 ml, 0,1 N wässeriger Essigsäure. Man nimmt in Eiswasser auf, extrahiert dreimal mit Diethylether, wäscht die vereinigten organischen Phasen zweimal mit Wasser, trocknet über $Na_2SO_4$ und zieht danach das Lösungsmittel im Vakuum ab. Nach der Reinigung des Rohprodukts durch Chromatographie an Kieselgel mit einem Petrolether-Chloroform-Gradienten werden 633 mg der reinen Zielverbindung erhalten. Die Dünnschichtchromatographie des Produkts auf Kieselgel (Laufmittel: Chloroform-Methanol 9 : 1 (v/v)) zeigt einen einheitlichen Spot, $R_f$ 0,6.

$^1$H-NMR-Spektrum: δ ppm ($CDCl_3$)

0,88 ($-CH_3$); 1,26 ($-CH_2-$); 1,8 - 2,3 ($-CH_2-CH_2-C=C$, $-CH_2-CH_2-C=O$); 3,1 - 4,3 (Glycerol und Ethanolamin C-H); 5,1 (Glycerol $C_2$-C-H, Oleoyl HC=CH); 7,25 (Triphenylrnethyl C-H).

B) 2-Oleoyl-sn-glycero-3-phospho-(N-triphenylmethyl)-ethanolamin

Eine Lösung von 406 mg 1-O-Triphenylmethyl-2-oleoyl-sn-glycero-3-phospho-(N-triphenylmethyl)-ethanolamin in einem Gemisch aus 30 ml Methylenchlorid und 1 ml einer 20 %-igen Lösung von Bortrifluorid in Methanol werden 30 min bei 0°C gerührt. Dann setzt man 30 ml Methylenchlorid zu, wäscht dreimal mit Wasser und trocknet die organische Phase über $Na_2SO_4$.

C) 1-Palmitoyl-2-oleoyl-sn-glycero-3-phospho-(N-triphenylmethyl)-ethanolamin

Zur Lösung des gebildeten 2-Oleoyl-sn-glycero-3-phospho-(N-triphenylmethyl)-ethanolamins werden 1,3 g Palmitinsäureanhydrid und 230 mg Dimethylaminopyridin zugegeben. Das Reaktionsgemisch wird 6 Stunden bei 20°C gerührt. Danach wird das Lösungsmittel im Vakuum abgezogen. Nach der Chromatographie des Rückstandes an Kieselgel mit einem Petrolether-Chloroform-Gradienten erhält man 361 mg des reinen Acylierungsprodukts. Die Verbindung zeigt bei der Dünnschichtchromatographie auf Kieselgel (Laufmittel: Chloroform-Methanol 9/1 (v/v)) einen einheitlichen Spot, $R_f$ 0,6.

$^1$H-NMR-Spektrum: δ ppm ($CDCl_3$)

0,88 ($-CH_3$); 1,22 ($-CH_2-$); 1,55 ($-CH_2-C-CO$); 1,8 - 2,3 ($-CH_2-CH_2-C=$, - $CH_2-C=O$); 3,1 - 4,3 (Glycerol und Ethanolamin C-H); 5,1 (Glycerol = C-H, Oleoyl CH=CH); 7,25 (Triphenylmethyl C-H).

D) 1 -Palmitoyl-2-oleoyl-sn-glycero-3-phosphoethanolamin

Eine Lösung von 190 mg 1-Palmitoyl-2-oleoyl-sn-3-glycero-(N-triphenylmethyl)ethanolamin in 12 ml eines Gemisches aus 6 ml Methylenchlorid und 6 ml Trifluoressigsäure wird unter Feuchtigkeitsausschluß 5 min bei 0°C stehengelassen. Dann wird in einem Guß mit 23 ml einer sechsprozentigen wässerigen Ammoniaklösung neutralisiert. Die wässerige Phase wird abgetrennt und mit Chloroform-Methanol 2/1 (v/v) extrahiert. Die vereinigten organischen Phasen werden mit Wasser gewaschen. Nach dem Abziehen des Lösungsmittels im Vakuum wird das Rohprodukt durch Chromatographie an Kieselgel mit einem Chloroform-Methanol-Gradienten gereinigt. Die Verbindung zeigt bei der Dünnschichtchromatographie auf Kieselgel (Laufmittel: Chloroform-Methanol-25 %-ige wäßrige $NH_3$ Lösung, 50 : 25 : 6 (v/v/v)) einen einheitlichen Spot, $R_f$ 0,5.

**Beispiel 16:**

A) 1-O-Triphenylmethyl-2-linoleoyl-sn-glycero-3-phospho-(N-triphenylmethyl)-ethanolamin

464 mg Linolsäure und 365 mg Carbonyldiimidazol werden 45 Minuten in 15 ml Tetrahydrofuran bei 20° C umgesetzt. Die Lösung des gebildeten Acylimidazolids wird zu 530 mg 1-O-Triphenylmethyl-sn-glycero-3-phospho-(N-triphenylmethyl)-ethanolamin (gemäß Beispiel 2) zugegeben. Nach dem Abziehen des Lösungsmittels im Vakuum wird der Rückstand in 15 ml Dimethylsulfoxid gelöst und die Reaktion durch Zugabe des katalytisch wirkenden Säurebindemittels, welches durch Lösen von 49 mg metallischem Natrium in 3.7 ml Dimethylsulfoxid erhalten wurde, eingeleitet. Das Reaktionsgemisch wird unter gelegentlichem Umschütteln 20 Minuten bei 20°C gehalten und hierauf mit 10.4 ml wässeriger 0,1 N Essissäure in einem Guß neutralisiert. Dann wird zweimal mit je 20 ml Chloroform-Methanol 2 : 1 (v/v) extrahiert. Die vereinigten organischen Phasen werden nacheinander mit je 8 ml Chloroform-Methanol-wässeriger $NH_3$-Lösung (3 : 48 : 47, v/v/v) und Chloroform-Methanol-Wasser (3 : 48 : 47, v/v/v) gewaschen. Nach dem Abziehen des Lösungsmittels im Vakuum und Evaporieren in Gegenwart von Benzol wurde ein Rohprodukt erhalten, welches nach der Reinigung durch Mitteldruckchromatographie an Kieselgel mit einem Chloroform-Methanol-Gradienten 670 mg (92 % Ausbeute) der reinen Verbindung ergibt. Die reine Verbindung zeigt im Dünnschichtchromatogramm auf Kieselgel (Laufmittel: Methanol-Chloroform 8 : 3, v/v) einen einheitlichen Spot; $R_f$ 0.61.

B) 2-Linoleoyl-sn-glycero-3-phospho-(N-triphenylmethyl)-ethanolamin

Aus 435 mg 1-O-Triphenylmethyl-sn-glycero-3-phospho-(N-triphenylmethyl)-ethanolamin werden nach der in Beispiel 15, Stufe B, angegebenen Arbeitsmethode, die 1-O-Triphenylmethylgruppe mit 0,5 ml einer 20 %-igen Lösung von Bortrifluorid in Methanol abgespalten.

C) 1-Oleoyl-2-linoleoyl-sn-glycero-3-phospho-(N-triphenylmethyl)-ethanolamin

D) 1-Oleoyl-2-linoleoyl-sn-glycero-3-phosphoethanolamin

2-Linoleoyl-sn-glycero-3-phospho-(N-triphenylmethyl)-ethanolamin wird analog zur Arbeitsvorschrift in Beispiel 15, Stufe C, durch Umsetzung mit Ölsäureanhydrid zum 1-Oleoyl-2-linoleoyl-sn-glycero-sn-3-phospho-(N-triphenylmethyl)-ethanolamin weiteracyliert und daraus analog zu der in Beispiel 15, Stufe D, angegebenen Arbeitsmethode der N-Triphenylmethylrest abgespalten.

**Beispiel 17:**

A) 1-O-Triphenymethyl-2-stearoylmethyl-sn-glycero-3-phospho-(N-triphenylmethyl)-ethanolamin wurde analog zur Arbeitsvorschrift in Beispiel 16, Stufe A, durch Umsetzung von 380 mg 1-O-Triphenylmethyl-sn-glycero-3-phospho-(N-triphenylmethyl)-ethanolamin mit 350 mg Stearoylimidazolid hergestellt.

B) 2-Stearyol-sn-glycero-3-phospho-(N-triphenylmethyl)-ethanolamin wurde durch Abspaltung der 1-O-Triphenylmethylgruppe aus dem in Stufe A erhaltenen Produkt nach der in Beispiel 15, Stufe B, angegebenen Arbeitsvorschrift erhalten.

C) 1-Oleoyl-2-Stearoyl-sn-glycero-3-phospho-(N-triphenylmethyl)-ethanolamin

D) 1-Oleoyl-2-stearoyl-sn-glycero-3-phosphoethanolamin

Das in Stufe B erhaltene 2-Stearoyl-sn-glycero-3-phospho-(N-triphenyl-methyl)-ethanolamin wird analog zur Arbeitsvorschrift in Beispiel 15, Stufe C, mit 1,5 g Ölsäureanhydrid zu 340 mg 1-Oleoyl-2-stearoyl-sn-glycero-3-phospho-(N-triphenylmethyl)-ethanolamin umgesetzt. Die Detritylierung analog zur Arbeitsvorschrift in Beispiel 15, Stufe D, ergibt 250 mg 1-Oleoyl-2-stearoyl-sn-glycero-3-phosphoethanolamin, woraus durch Chromatographie an Kieselgel mit einem Chloroform-Methanol-Gradienten 140 mg reines Produkt erhalten werden, welches im Dünnschichtchromatogramm (Laufmittel: Chloroform-Methanol-25 %-ige wäßrige $NH_3$ Lösung, 50 : 25 : 6, v/v/v) einen einheitlichen Spot zeigt; $R_f$-Wert 0,5.

**Beispiel 18:**

A) 1-O-Triphenylmethyl-2-acetyl-sn-glycero-3-phospho-(N-triphenylmethyl)-ethanolamin

300 mg 1-O-Triphenylmethyl-sn-glycero-3-phospho-(N-triphenylmethyl)-ethanolamin (gemäß Beispiel 2) werden mit 500 ml Acetanhydrid in 5 ml wasserfreiem Pyridin 20 Stunden bei 20°C umgesetzt. Dann wird auf 50 ml Eiswasser gegossen und zweimal mit Chloroform-Methanol 2 : 1 (v/v) extrahiert. Die vereinigten organischen Phasen werden zweimal mit Chloroform-Methanol-Wasser 3 : 48 : 47 (v/v/v) gewaschen über Natriumbicarbonat getrocknet und unter Vakuum zur Trockene gebracht. Restliches Pyridin wird durch Abdampfen in Gegenwart von Toluol entfernt. Das Rohprodukt wird durch Mitteldruckchromatographie an Kieselgel mit einem Chloroform-Methanol-Gradienten gereinigt. Die erhaltene Reinsubstanz (128 mg, 40 % Ausbeute) zeigt im Dünnschichtchromatogramm auf Kieselgel (Laufmittel: Chloroform-Methanol 8 : 2, v/v) einen einheitlichen Spot; $R_f$-Wert 0,50.

$^1$H-NMR-Spektrum: δ ppm ($CDCl_3$ - $CD_3OD$ 2 : 1, v/v);

2.0 ($H_3C$ - CO, s, 3H); 2,8 - 4.2 (Glycerol und Cholin-$CH_2$); 5.16 (Glycerol-CH, m, 1H); 7.23 (Aromat, 30H)

1-O-Triphenylmethyl-2-acetyl-sn-glycero-3-phospho-(N-triphenylmethylamin)-ethanolamin wurde analog zu den Arbeitsvorschriften in den Stufen B, C und D des Beispiels 15 zu folgenden weiteren Produkten umgesetzt:

B) 2-Acetyl-sn-glycero-3-phospho-(N-triphenylmethyl)-ethanolamin

C) 1-Palmitoyl-2-acetyl-sn-glycero-3-phospho-(N-triphenylmethyl)-ethanolamin

D) 1-Palmitoyl-2-acetyl-sn-glycero-3-phosphoethanolamin

**Beispiel 19:**

A) 1-O-Triphenylmethyl-2-propionyl-sn-glycero-3-phospho-(N-triphenylmethyl)-ethanolamin

450 mg 1-O-Triphenylmethyl-sn-glycero-3-phospho-(N-triphenylmethyl)-ethanolamin (gemäß Beispiel 2) wurde mit 900 mg Propionsäureanhydrid in 10 ml Pyridin bei 30°C analog zur Arbeitsvorschrift in Beispiel 18, Stufe A, zu 1-O-Triphenylmethyl-2-propionyl-sn-glycero-3-phospho-(N-triphenylmethyl)-ethanolamin umgesetzt, aufgearbeitet und gereinigt.

Ausbeute 220 mg (45 % der Theorie); $R_f$-Wert 0.5. Das erhaltene Produkt wurde analog zu den Arbeitsvorschriften in Beispiel 15, Stufen B, C und D zu folgenden Verbindungen umgesetzt:

B) 2-Propionyl-sn-glycero-3-phospho-(N-triphenylmethyl)-ethanolamin

C) 1-Palmitoyl-2-propionyl-sn-glycero-3-phospho-(N-triphenylmethyl)-ethanolamin

D) 1-Palmitoyl-2-propionyl-sn-glycero-3-phosphoethanolamin

**Beispiel 20:**

A) 1-O-Triphenylmethyl-2-butyryl-sn-glycero-3-phospho-(-tirphenylmethyl)-ethanolamin

500 mg 1-O-Triphenylmethyl-sn-glycero-3-phospho-(N-triphenylmethyl)-ethanolamin (gemäß Beispiel 2) wurde mit Butyrylimidazolid, welches aus 132 mg Buttersäure und 267 mg Carbonyldiimidazol erhalten wurde, wie in Beispiel 16, Stufe A, acyliert, aufgearbeitet und gereinigt. Das erhaltene Produkt (300 mg, 56 % Ausbeute; $R_f$-Wert 0.52, auf Kieselgel, Laufmittel: Chloroform-Methanol 8 : 2, v/v) wurde analog zu den Arbeitsvorschriften in Beispiel 15, Stufen B, C und D zu folgenden Verbindungen weiter umgesetzt:

B) 2-Butyryl-sn-glycero-3-phospho-(N-triphenylmethyl)-ethanolamin

C) 1-Palmitoyl-2-butyryl-sn-glycero-3-phospho-(N-triphenylmethyl)-ethanolamin

D) 1-Palmitoyl-2-butyryl-sn-glycero-3-phosphoethanolamin

**Beispiel 21:**

A) 1-O-Triphenylmethyl-2-isobutyryl-sn-glycero-3-phospho-(N-triphenylmethyl)-ethanolamin

500 mg 1-O-Triphenylmethyl-sn-glycero-3-phospho-(N-triphenylmethyl)-ethanolamin (gemäß Beispiel 2) wurde mit Isobutyrylimidazolid, welches aus 132 mg Isobuttersäure und 267 mg Carbonyldiimidazol erhalten wurde, wie in Beispiel 16, Stufe A, acyliert, aufgearbeitet und gereinigt. Das erhaltene Produkt (272 mg, 50 % Ausbeute; $R_f$-Wert 0.53, auf Kieselgel, Laufmittel; Chloroform-Methanol 8 : 2 v/v) zeigt folgende spektroskopische Daten:

$^1$H-NMR-Spektrum: δ ppm ($CDCl_3$ - $CD_3OD$, 2:1, v/v)

1.2 ($CH_3$, 6H); 2,5 - 3,9 (Glycerol und Cholin $CH_2$, 8H); 5.26 (Glycerol-CH, m, 1H); 7.23 (Aromat, 30H).

1-O-Triphenylmethyl-2-isobutyryl-sn-glycero-3-phospho-(N-triphenylmethyl)-ethanolamin wurde analog zu Beispiel 16, Stufen B, C und D zu folgenden Verbindungen umgesetzt:

B) 2-Isobutyryl-sn-glycero-3-phospho-(N-triphenylmethyl)-ethanolamin

C) 1-Oleoyl-2-isobutyryl-sn-glycero-3-phospho-(N-triphenylmethyl)-ethanolamin

D) 1 -Oleoyl-2-isobutyryl-sn-glycero-3-phosphoethanolamin

**Beispiel 22:**

A) 1-O-Triphenylmethyl-2-(3'-trifluormethylbutyryl)-sn-glycero-3-phospho-(N-triphenylmethyl)-ethanolamin

900 mg 1-O-Triphenylmethyl-sn-glycero-3-phospho-(N-triphenylmethyl)-ethanolamin (gemäß Beispiel 2) und 500 mg 3-Trifluormethylbutyrylanhydrid wurden in 50 ml Methylenchlorid nach Zugabe von 300 mg 4-N,N-Dimethylaminopyridin 4 Studen bei 20°C gerührt. Nach Zugabe von Wasser wird ausgeschüttelt, die organische Phase über $Na_2SO_4$ getrocknet und in Vakuum eingedampft. Nach der Reinigung des Rohproduktes durch Mitteldruckchromatographie an Kieselgel mit einem Chloroform-Methanol-Gradienten in Gegenwart von 0.5 Vol-% wäßriger $NH_3$ Lösung werden 820 mg (76 % Ausbeute; $R_f$-Wert 0.50, auf Kieselgel, Laufmittel: Chloroform-Methanol 8 : 2, v/v) 1-O-Triphenylmethyl-2-(3'-trifluormethylbutyryl)-sn-glycero-3-phospho-(N-triphenylmethyl)-ethanolamin erhalten. Dieses Produkt wurde analog zu Beispiel 15, Stufen B, C und D zu folgenden Verbindungen umgesetzt:

B) 2-(3'-Trifluormethylbutyryl)-sn-glycero-3-phospho-(N-triphenylmethyl)-ethanolamin

C) 1-Palmitoyl-2-(3'-trifluormethylbutyryl)-sn-glycero-3-phospho-(N-triphenylmethyl)-ethanolamin

D) 1-Palmitoyl-2-(3'-trifluormethylbutyryl)-sn-glycero-3-phosphoethanolamin

**Beispiel 23:**

A) 1-O-Triphenylmethyl-2-(2'-butylhexanoyl)-sn-glycero-3-phospho-(N-triphenylmethyl)-ethanolamin

430 mg 1-O-Triphenylmethyl-sn-glycero-3-phospho-(N-triphenylmethyl)-ethanolamin (gemäß Beispiel 2) wurde mit 2-Butylhexanoylimidazolid, welches aus 200 mg 2-Butylhexansäure und 210 mg Carbonyldiimidazol erhalten wurde, wird wie in Beispiel 16, Stufe A, acyliert aufgearbeitet und gereinigt. Das erhaltene Produkt (370 mg, 70 % Ausbeute; $R_f$ -Wert 0.55, auf Kieselgel, Laufmittel: Chloroform-Methanol 8 : 2, v/v) wurde analog zu den Arbeitsvorschriften in Beispiel 15, Stufen B, C und D zu folgenden Verbindungen weiter umgesetzt:

B) 2-(2'-Butylhexanoyl)-sn-glycero-3-phospho-(N-triphenylmethyl)-ethanolamin

C) 1-Palmitoyl-2-(2'-butylhexanoyl)-sn-glycero-3-phospho-(N-triphenylmethyl)-ethanolamin

D) 1-Palmitoyl-2-(2'-butylhexanoyl)-sn-glycero-3-phosphoethanolamin

**Beispiel 24:**

A) 1-O-Triphenylmethyl-2-arachidonoyl-sn-glycero-3-phospho-(N-triphenylmethyl)-ethanolamin

500 mg 1-O-Triphenylmethyl-sn-glycero-3-phospho-(N-triphenylmethyl)-ethanolamin (gemäß Beispiel 2) und 890 mg Arachidonsäureanhydrid wurden in 50 ml Methylenchlorid nach Zugabe von 300 mg 4-N,N-Dimethylaminopyridin 4 Stunden bei 20°C gerührt. Nach Zugabe von Wasser wird ausgeschüttelt, die organische Phase über $Na_2SO_4$ getrocknet und im Vakuum eingedampft. Nach der Reinigung des Rohproduktes durch Mitteldruckchromatographie an Kieselgel mit einem Chloroform-Methanol-Gradienten in Gegenwart von 0.5 Vol-% wäßrigem $NH_3$ werden 520 mg (82 % Ausbeute; $R_f$-Wert 0.61, auf Kieselgel, Laufmittel: Chloroform-Methanol 8 : 2, v/v) 1-O-Triphenylmethyl-2-arachidonoyl-sn-glycero-3-phospho-(N-triphenylmethyl)-ethanolamin erhalten. Dieses Produkt wurde analog zu Beispiel 15, Stufen B, C und D zu folgenden Verbindungen umgesetzt:

B) 2-Arachidonoyl-sn-glycero-3-phospho-(N-triphenylmethyl)-ethanolamin

C) 1-Palmitoyl-2-arachidonoyl-sn-glycero-3-phospho-(N-triphenylmethyl)-ethanolamin

D) 1-Palmitoyl-2-arachidonoyl-sn-glycero-3-phosphoethanolamin

**Beispiel 25:**

A) 1-O-Triphenylmethyl-2-tetracosanoyl-sn-glycero-3-phospho-(N-triphenylmethyl)-ethanolamin

500 mg 1-O-Triphenylmethyl-sn-glycero-3-phospho-(N-triphenylmethyl)-ethanolamin (gemäß Beispiel 2) wurde mit Tetracosanoylimidazolid, welches aus 1,57 g Tetracosansäure und 267 mg Carbonyldiimidazol erhalten wurde, wird wie in Beispiel 16, Stufe A, acyliert, aufgearbeitet und gereinigt. Das erhaltene Produkt (640 mg, 90 % Ausbeute; $R_f$-Wert 0.6, auf Kieselgel, Laufmittel: Chloroform-Methanol 8 : 2, v/v) wurde analog zu den Arbeitsvorschriften in Beispiel 15, Stufen B, C und D zu folgenden Verbindungen weiterumgesetzt.

B) 2-Tetracosanoyl-sn-glycero-3-phospho-(N-triphenylmethyl)-ethanolamin

C) 1-Palmitoyl-2-tetracosanoyl-sn-glycero-3-phospho-(N-triphenylmethyl)-ethanolamin

D) 1 -Palmitoyl-2-tetracosanoyl-sn-glycero-3-phosphoethanolamin

**Beispiel 26:**

C) 1-Stearoyl-2-oleoyl-sn-glycero-3-phospho-(N-triphenylmethyl)-ethanolamin

Zu einer Lösung von 2-Oleoyl-sn-glycero-3-phospho-(N-triphenylmethyl)-ethanolamin, welches aus 1,1 g 1-O-Triphenylmethyl-2-oleoyl-sn-glycero-3-phospho-(N-triphenylmethyl)-ethanolamin (siehe Beispiel 15, Stufen A und B) erhalten wurde, in 150 ml Methylenchlorid werden 3,5 g Stearinsäureanhydrid und 625 mg 4-N,N-Dimethylaminopyriden zugegeben. Das Reaktionsgemisch wird 3 Stunden bei 20° C gerührt und dann mit 45 ml Chloroform-Methanol-Wasser (3 : 48 : 47, v/v/v) und 75 ml Methanol versetzt. Nach dem Ausschütteln wird die Unterphase abgetrennt und noch zweimal mit je 45 ml Chloroform-Methanol-wässeriger Ammoniak (3 : 48 : 47, v/v/v) sowie einmal mit Chloroform-Methanol-Wasser (3 : 48 : 47, v/v/v) gewaschen. Nach dem Abziehen des Lösungsmittels im Vakuum wird das Rohprodukt durch Mitteldruckchromatographie an Kieselgel mit einem Chloroform-Methanol-Gradienten gereinigt, wobei 990 mg (89 % Ausbeute, $R_f$-Wert 0.6, auf Kieselgel, Laufmittel: Chloroform-Methanol 9 : 1, v/v) an reiner Substanz erhalten werden.

D) 1-Stearoyl-2-oleoyl-sn-glycero-3-phoshpethanolamin

1 g 1-Stearoyl-2-oleoyl-sn-glycero-3-phospho-(N-triphenylmethyl)-ethanolamin werden in 30 ml Trifluoressigsäure 5 Minuten bei 0° C stehengelassen. Die Aufarbeitung erfolgt wie in Beispiel 15, Stufe D. Man erhält 550 mg Reinsubstanz (72 % Ausbeute), welche im Dünnschichtchromatogramm auf Kieselgel (Laufmittel: Chloroform-Methanol-25 %-ige $NH_3$, 50 : 25 : 6, v/v/v) einen einheitlichen Spot zeigt; $R_f$-Wert 0.5

**Beispiel 27:**

C) 1-Stearoyl-2-linoleoyl-sn-glycero-3-phospho-(N-triphenylmethyl)-ethanolamin

D) 1-Stearoyl-2-linoleoyl-sn-glycero-3-phosphoethanolamin

2-Linoleoyl-sn-glycero-3-phospho-(N-triphenylmethyl)-ethanolamin erhalten aus 700 mg 1-O-Triphenylmethyl-2-linoleoyl-sn-glycero-3-phoshpo-(N-triphenylmethyl)-ethanolamin, (siehe Beispiel 16, Stufen A und B) werden in Methylenchlorid mit 2,2 g Stearinsäureanhydrid und 390 mg 4-N,N-Dimethylaminopyridin versetzt und 3 Stunden bei Raumtemperatur gerührt. Das erhaltene Produkt wird, wie in Beispiel 15, Stufe D, beschrieben, mit Trifluoressigsäure umgesetzt und gereinigt.

Man erhält so 250 mg reines 1-Stearoyl-2-linoleoyl-sn-glycero-3-phosphoethanolamin, welches im Dünnschichtchromatogramm auf Kieselgel (Laufmittel: Chloroform-Methanol wie in Beispiel 26) einen einheitlichen Spot zeigt; $R_f$-Wert 0,5.

**Patentansprüche** für die Vertragsstaaten BE, CH, DE, FR, GB, IT, LI, LU, NL, SE

1. Triphenylmethylderivate des sn-Glycero-3-phosphocholins und sn-Glycero-3-phosphoethanolamins der allgemeinen Formel

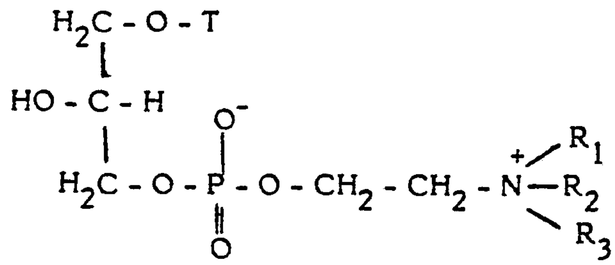

I, in der

T eine unsubstituierte oder durch ein $C_1$ - $C_6$-Alkyl, $C_1$ - $C_6$-Alkoxy oder Halogen ein- oder mehrfach substituierte Triphenylmethylgruppe bedeutet und die Reste

$R_1$, $R_2$, $R_3$ entweder gleich sind und jeweils für eine Methylgruppe stehen oder verschieden sind, wobei diesfalls zwei der Reste $R_1$, $R_2$ und $R_3$ immer Wasserstoff bedeuten und der dritte Rest eine unsubstituierte oder durch $C_1$ - $C_6$-Alkyl, $C_1$ - $C_6$-Alkoxy oder Halogen ein- oder mehrfach substituierte Triphenylmethylgruppe darstellt.

2. Verfahren zur Herstellung der Verbindungen der Formel I gemäß Anspruch 1, dadurch gekennzeichnet, daß man sn-Glycero-3-phosphocholin oder sn-Glycero-3-phospho-(N-triphenylmethyl)-ethanolamin der allgemeinen Formel

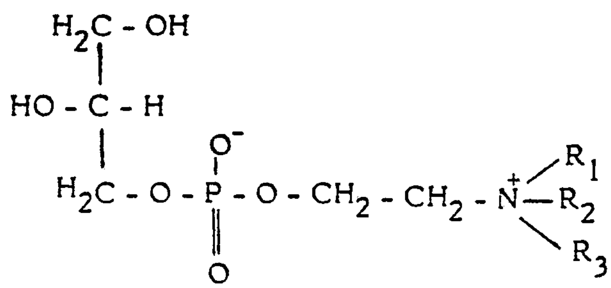

II, in der

$R_1$, $R_2$ und $R_3$ die in Formel I angegebene Bedeutung haben, deren Salze mit anorganischen oder organischen Säuren oder Basen oder deren Komplex mit Metallsalzen durch Umsetzung mit einem reaktiven Triphenylmethylderivat der allgemeinen Formel

T-X

III, in der

T wie in Formel I definiert ist und

X eine reaktive Abgangsgruppe, wie Chlor, Brom oder Jod, bedeutet,

in einem inerten organischen Lösungsmittel oder Lösungsmittelgemisch bei Temperaturen von Raumtemperatur bis zur Siedetemperatur des Lösungsmittels oder der niedrigstsiedenden Lösungsmittelkomponente des Lösungsmittelgemisches am Sauersoff in der Position 1 des Glycerins trityliert.

3. Verfahren gemäß Anspruch 2, dadurch gekennzeichnet, daß man als aktives Triphenylmethylderivat der allgemeinen Formel III einen 1,5- bis 3fachen molaren Überschuß an Triphenylmethylchlorid pro Mol der eingesetzten Verbindung der allgemeinen Formel II verwendet.

4. Verfahren gemäß den Ansprüchen 2 und 3, dadurch gekennzeichnet, daß man die Umsetzung in Gegenwart eines Überschusses eines Protonenakzeptors durchführt.

5. Verfahren gemäß den Ansprüchen 2 bis 4, dadurch gekennzeichnet, daß man die Umsetzung in Gegenwart eines tertiären Amins oder einer heterocyclischen Base als Protonenakzeptor durchführt.

6. Verfahren gemäß den Ansprüchen 2 bis 5, dadurch gekennzeichnet, daß man die Umsetzung im Temperaturbereich zwischen 20 und 80°C durchführt.

7. Verwendung der Verbindungen der allgemeinen Formel I gemäß Anspruch 1 zur Herstellung von enantiomerenreinen Phosphatidylcholinen und Phosphatidylethanolaminen mit definierter chemischer Struktur, die in den Positionen 1 und 2 des Glycerins unabhängig voneinander verschiedene Acylreste tragen.

8. Verwendung gemäß Anspruch 7 zur Herstellung von gemischt substituierten 1,2-Diacyl-sn-glycero-3-phosphocholinen und 1,2-Diacyl-sn-glycero-3-phos-phosphoethanolaminen der allgemeinen Formel

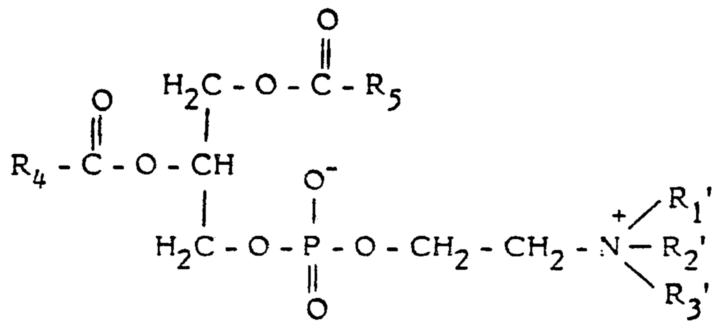

IV, in der

$R_1'$,$R_2'$,$R_3'$ gleich sind und jeweils entweder 3 Wasserstoffatome oder 3 Methylgruppen,

$R_4$ und $R_5$ verschieden sind und unabhängig voneinander einen unsubstituierten oder durch Halogen oder Alkoxy ein- oder mehrfach substituierten, geradkettigen oder verzweigten $C_1$ bis $C_{24}$-Alkyl- oder geradkettigen oder verzweigten, ein- oder mehrfach ungesättigten $C_3$ bis $C_{24}$-Alkenylrest bedeuten,

indem man eine Verbindung der allgemeinen Formel I mit einem acylierend wirkenden Derivat einer Carbonsäure der allgemeinen Formel $R_4COOH$ zu einer Verbindung der allgemeinen Formel

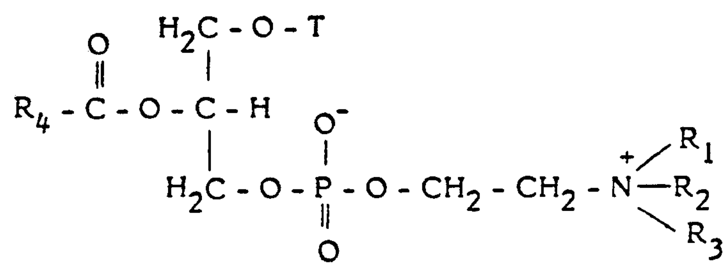

wobei

T, $R_1$, $R_2$, $R_3$ wie in Formel I definiert sind und

$R_4$ die in Formel IV angegebene Bedeutung hat, acyliert,

worauf aus einer erhaltenen Verbindung der allgemeinen Formel V durch Einwirkung von Säuren mit der Maßgabe, daß bei Verbindungen der Formel V, in denen einer der Reste $R_1$, $R_2$ und $R_3$ eine Triphenylgruppe ist, die Säure eine Lewis-Säure ist, die 1-O-Triphenylmethylgruppe unter Bildung eines 2-Acyl-sn-glycero-3-phosphocholins oder 2-Acyl-sn-glycero-3-phospho-(N-triphenylmethyl)-ethanolamins der allgemeinen Formel

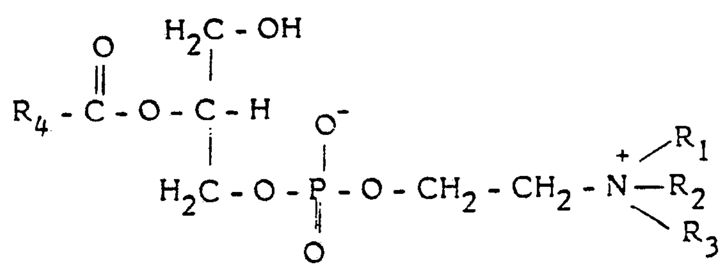

VI, in der

$R_1$, $R_2$, $R_3$ und $R_4$ die oben angegebene Bedeutung haben, abgespalten und die Verbindung der allgemeinen Formel VI durch Umsetzung mit einem acylierend wirkenden Derivat einer Carbonsäure der allgemeinen Formel $R_5COOH$ zu einem 1,2-Diacyl-sn-glycero-3-phosphocholin oder 1,2-Diacyl-sn-glycero-3-phospho-(N-triphenylmethyl)-ethanolamin der allgemeinen Formel

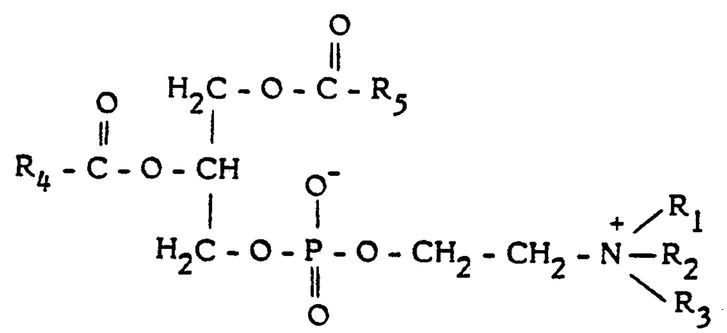

IVa, wobei
$R_1$, $R_2$, $R_3$ wie in Formel I definiert sind,
$R_4$ und $R_5$ die in Formel IV angegebene Bedeutung haben, weiteracyliert wird, wonach eine erhaltene Verbindung der allgemeinen Formel IVa, in der einer der Reste $R_1'$, $R_2'$ und $R_3'$ eine Triphenylmethylgruppe bedeutet, durch Einwirkung von Säuren in aprotischen Lösungsmitteln in eine Verbindung der allgemeinen Formel IV, in der die Reste $R_1$, $R_2$ und $R_3$ Wasserstoff bedeuten, übergeführt wird.

**Patentansprüche** für den Vertragsstaat AT

1. Verfahren zur Herstellung der neuen Triphenylmethylderivate des sn-Glycero-3-phosphocholins und sn-Glycero-3-phosphoethanolamins der allgemeinen Formel

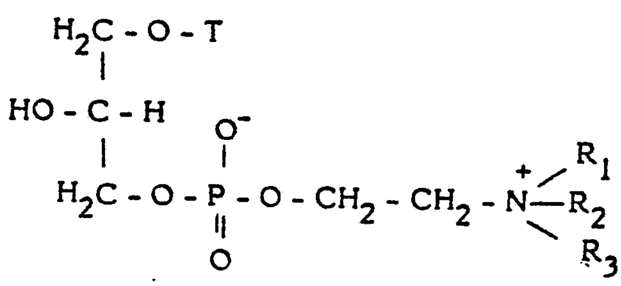

I, in der
T eine unsubstituierte oder durch ein $C_1$ - $C_6$-Alkyl, $C_1$ - $C_6$-Alkoxy oder Halogen ein- oder mehrfach substituierte Triphenylmethylgruppe bedeutet und die Reste
$R_1$, $R_2$, $R_3$ entweder gleich sind und jeweils für eine Methylgruppe stehen oder verschieden sind, wobei diesfalls zwei der Reste $R_1$, $R_2$ und $R_3$ immer Wasserstoff bedeuten und der dritte Rest eine unsubstituierte oder durch $C_1$ - $C_6$-Alkyl, $C_1$ - $C_6$-Alkoxy oder Halogen ein- oder mehrfach substituierte Triphenylmethylgruppe darstellt, dadurch gekennzeichnet, daß man sn-Glycero-3-phosphocholin oder sn-Glycero-3-phospho-(N-triphenylmethyl)-ethanolamin der allgemeinen Formel

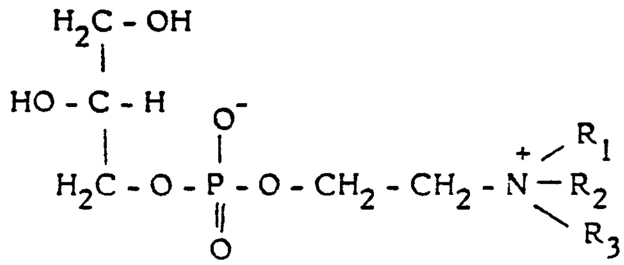

II, in der
$R_1$, $R_2$ und $R_3$ die in Formel I angegebene Bedeutung haben, deren Salze mit anorganischen oder organischen Säuren oder Basen oder deren Komplex mit Metallsalzen durch Umsetzung mit einem reaktiven Triphenylmethylderivat der allgemeinen Formel

T-X

III, in der
T wie in Formel I definiert ist und
X eine reaktive Abgangsgruppe, wie Chlor, Brom oder Jod, bedeutet,
in einem inerten organischen Lösungsmittel oder Lösungsmittelgemisch bei Temperaturen von Raumtemperatur bis zur Siedetemperatur des Lösungsmittels oder der niedrigstsiedenden Lösungsmittelkomponente des Lösungsmittelgemisches am Sauersoff in der Position 1 des Glycerins trityliert.

2. Verfahren gemäß Anspruch 1, dadurch gekennzeichnet, daß man als aktives Triphenylmethylderivat der allgemeinen Formel III einen 1,5 - 3-fachen molaren Überschuß an Triphenylmethylchlorid pro Mol der eingesetzten Verbindung der allgemeinen Formel II verwendet.

3. Verfahren gemäß den Ansprüchen 1 und 2, dadurch gekennzeichnet, daß man die Umsetzung in Gegenwart eines Überschusses eines Protonenakzeptors durchführt.

4. Verfahren gemäß den Ansprüchen 1 bis 3, dadurch gekennzeichnet, daß man die Umsetzung in Gegenwart eines tertiären Amins oder einer heterocyclischen Base als Protonenakzeptor durchführt.

5. Verfahren gemäß den Ansprüchen 1 bis 4, dadurch gekennzeichnet, daß man die Umsetzung im Temperaturbereich zwischen 20 und 80°C durchführt.

6. Verwendung der nach dem Verfahren gemäß Anspruch 1 hergestellten Verbindungen der allgemeinen Formel I zur Synthese von enantiomerenreinen Phosphatidylcholinen und Phosphatidylethanolaminen mit definierter chemischer Struktur, die in den Positionen 1 und 2 des Glycerins unabhängig voneinander verschiedene Acylreste trägen.

7. Verwendung gemäß Anspruch 6 zur Herstellung von gemischt substituierten 1,2-Diacyl-sn-glycero-3-phosphocholinen und 1,2-Diacyl-sn-glycero-3-phosphoethanolaminen der allgemeinen Formel

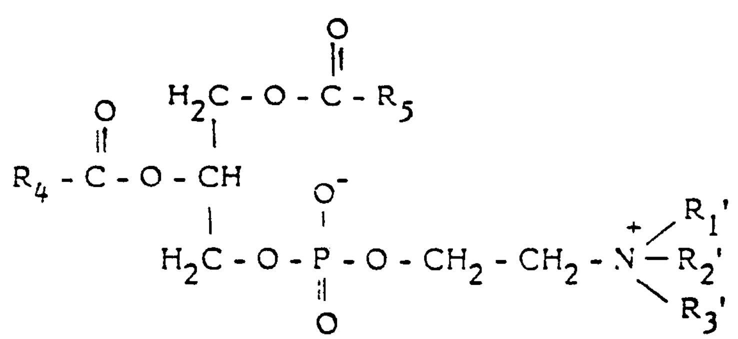

IV, in der
$R_1'$, $R_2'$, $R_3'$ gleich sind und jeweils entweder 3 Wasserstoffatome oder 3 Methylgruppen,
$R_4$ und $R_5$ verschieden sind und unabhängig voneinander einen unsubstituierten oder durch Halogen oder Alkoxy ein- oder mehrfach substituierten, geradkettigen oder verzweigten $C_1$ bis $C_{24}$-Alkyl- oder geradkettigen oder verzweigten, ein- oder mehrfach ungesättigten $C_1$ bis $C_{24}$-Alkenylrest bedeuten;
indem man eine Verbindung der allgemeinen Formel I mit einem acylierend wirkenden Derivat einer Carbonsäure der allgemeinen Formel $R_4COOH$ in Anwesenheit eines Säurebindemittels zu einer Verbindung der allgemeinen Formel

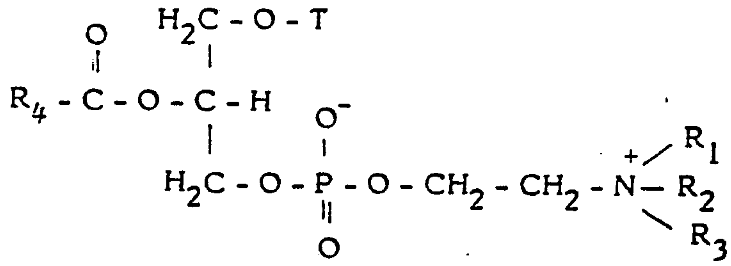

V,
wobei
T, $R_1$, $R_2$, $R_3$ wie in Formel I definiert sind und
$R_4$ die in Formel IV angegebene Bedeutung hat, acyliert,
worauf aus einer erhaltenen Verbindung der allgemeinen Formel V durch Einwirkung von Säuren, mit der Maßgabe, daß bei Verbindungen der Formel V, in denen einer der Reste $R_1$, $R_2$ und $R_3$ eine Triphenylmethylgruppe ist, die Säure eine Lewis-Säure ist die 1-O-Triphenylmethylgruppe unter Bildung eines 2-Acyl-sn-glycero-3-phosphocholins oder 2-Acyl-sn-glycero-3-phospho-(N-triphenylmethyl)-ethanolamins der allgemeinen Formel

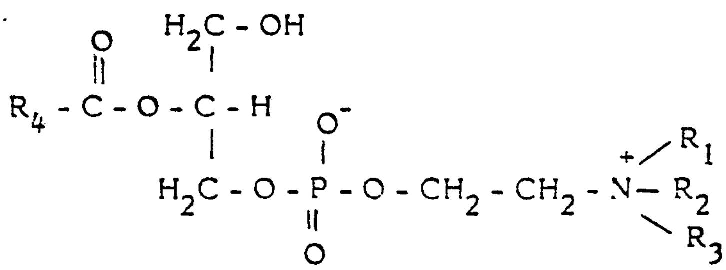

VI, in der
T, $R_1$, $R_2$, $R_3$ und $R_4$ die oben angegebene Bedeutung haben, abgespalten und die Verbindung der allgemeinen Formel VI durch Umsetzung mit einem acylierend wirkenden Derivat einer Carbonsäure der allgemeinen Formel $R_5COOH$ in Anwesenheit eines Säurebindemittels zu einem 1,2-Diacyl-sn-glycero-3-phosphocholin oder 1,2-Diacyl-sn-glycero-3-phospho-(N-triphenylmethyl)-ethanolamin der allgemeinen Formel

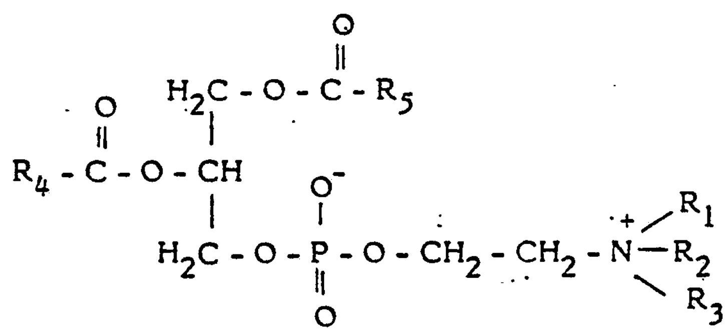

IVa, wobei
$R_1$, $R_2$, $R_3$ wie in Formel I definiert sind,
$R_4$ und $R_5$ die in Formel IV angegebene Bedeutung haben, weiteracyliert wird wonach eine erhaltene Verbindung der allgemeinen Formel IVa, in der einer der Reste $R_1$, $R_2$ und $R_3$ eine Triphenylmethylgruppe und die beiden anderen Wasserstoff bedeuten, durch Einwirkung von Säuren in aprotischen Lösungsmitteln in eine Verbindung der allgemeinen Formel IV, in der die Reste $R_1'$, $R_2'$ und $R_3'$ Wasserstoff bedeuten, übergeführt wird.

**Claims** for the Contracting States BE, CH, DE, FR, GB, IT, LI, LU, NL, SE

1. Triphenylmethyl derivates of sn-glycero-3-phosphocholine and sn-glycero-3-phosphoethanolamine of the general formula

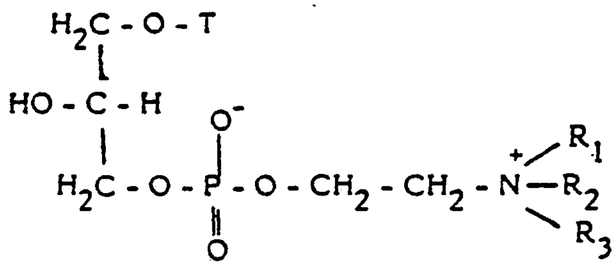

I

in which

T denotes a triphenylmethyl group which is unsubstituted or monosubstituted or polysubstituted by $C_1$-$C_6$-alkyl, $C_1$-$C_6$-alkoxy or halogen, and the radicals

$R_1$, $R_2$ and $R_3$ are either identical and represent in each case a methyl group or are different, in which case two of the radicals $R_1$, $R_2$ and $R_3$ always denote hydrogen and the third radical represents a triphenylmethyl group which is unsubstituted or monosubstituted or polysubstituted by $C_1$-$C_6$-alkyl, $C_1$-$C_6$-alkoxy or halogen.

2. Process for the preparation of the compounds of the formula I according to Claim 1, characterized in that sn-glycero-3-phosphocholine or sn-glycero-3-phospho-(N-triphenylmethyl)-ethanolamine of the general formula

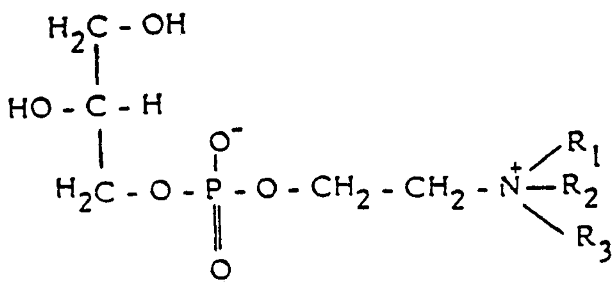

II

in which

$R_1$, $R_2$ and $R_3$ have the meaning indicated in formula I, salts thereof with inorganic or organic acids or bases or a complex thereof with metal salts are tritylated at the oxygen in position 1 of the glycerol by being reacted with a reactive triphenylmethyl derivative of the general formula

T-X

III

in which

T is as defined in formula I and

X denotes a reactive detachable group, such as chlorine, bromine or iodine, in an inert organic solvent or solvent mixture at temperatures from room temperature up to the boiling point of the solvent or of the lowest-boiling solvent component in the solvent mixture.

3. Process according to Claim 2, characterized in that the active triphenylmethyl derivative of the general formula III used is a 1.5-fold to 3-fold molar excess of triphenylmethyl chloride per mole of the compound of the general formula II employed.

4. Process according to Claims 2 and 3, characterized in that the reaction is carried out in the presence of an excess of a proton acceptor.

5. Process according to Claims 2 to 4, characterized in that the reaction is carried out in the presence, as a proton acceptor, of a tertiary amine or a heterocyclic base.

6. Process according to Claims 2 to 5, characterized in that the reaction is carried out within the temperature range between 20 and 80°C.

7. The use of the compounds of the general formula I according to Claim 1 for the preparation of phosphatidylcholines and phosphatidylethanolamines which are pure enantiomers and have a defined chemical structure and carry, in positions 1 and 2 of the glycerol, acyl radicals which are different, independently of one another.

8. Use, according to Claim 7, for the preparation of 1,2-diacyl-sn-glycero-3-phosphocholines and 1,2-diacyl-sn-glycero-3-phosphoethanolamines which contain mixed substituents and have the general formula

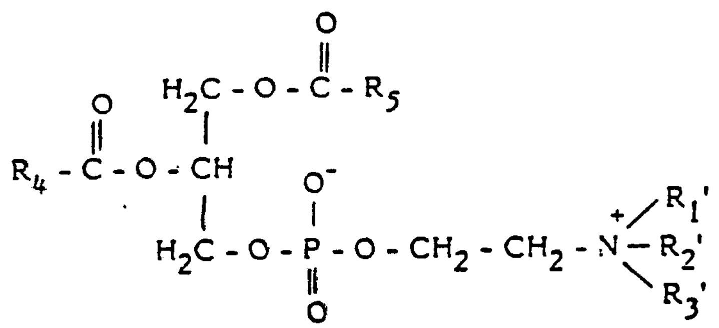

IV

in which

$R_1'$, $R_2'$ and $R_3'$ are identical and are either 3 hydrogen atoms or 3 methyl groups in each case and

$R_4$ and $R_5$ are different and, independently of one another, denote a linear or branched $C_1$-$C_{24}$-alkyl radical or a linear or branched, mono-unsaturated or polyunsaturated $C_3$-$C_{24}$-alkenyl radical each of which is unsubstituted or monosubstituted or polysubstituted by halogen or alkoxy,

by acylating a compound of the general formula I by means of a derivative, having an acylating action, of a carboxylic acid of the general formula $R_4$-COOH to give a compound of the general formula

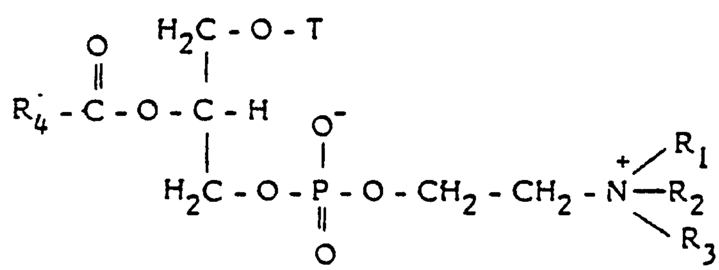

V

in which

T, $R_1$, $R_2$ and $R_3$ are as defined in formula I and

$R_4$ has the meaning indicated in formula IV, after which the 1-O-triphenylmethyl group is split off from a resulting compound of the general formula V by the action of acids, subject to the proviso that, in the case of compounds of the formula V in which one of the radicals $R_1$, $R_2$ and $R_3$ is a triphenyl group, the acid is a Lewis acid, with the formation of a 2-acyl-sn-glycero-3-phosphocholine or 2-acyl-sn-glycero-3-phospho-(N-triphenylmethyl)ethanolamine of the general formula

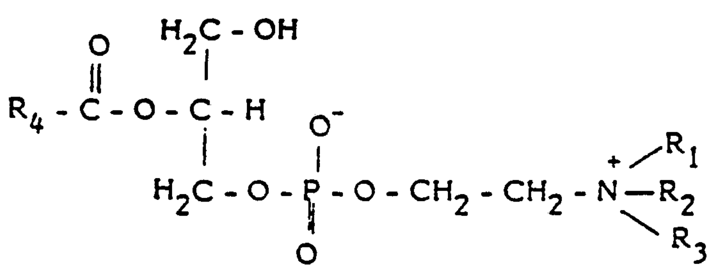

VI

in which

$R_1$, $R_2$, $R_3$ and R4 have the meaning indicated above, and the compound of the general formula VI is acylated further by being reacted with a derivative, having an acylating action, of a carboxylic acid of the general formula $R_5$-COOH to give a 1,2-diacyl-sn-glycero-3-phosphocholine or 1,2-diacyl-sn-glycero-3-phospho-(N-triphenylmethyl)ethanolamine of the general formula

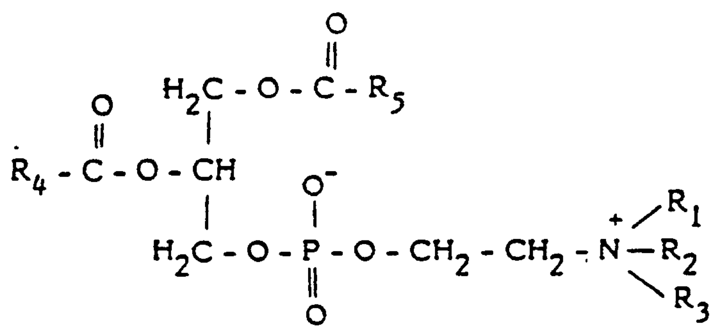

IVa

in which

$R_1$, $R_2$ and $R_3$ are as defined in formula I and

$R_4$ and $R_5$ have the meaning indicated in formula IV, after which a resulting compound of the general formula IVa in which one of the radicals $R_1'$, $R_2'$ and $R_3'$ denotes a triphenylmethyl group is converted, by the action of acids in aprotic solvents, into a compound of the general formula IV in which the radicals $R_1$, $R_2$ and $R_3$ denote hydrogen.

**Claims** for the Contracting State AT

1. Process for the preparation of the new triphenylmethyl derivatives of sn-glycero-3-phosphocholine and sn-glycero-3-phosphoethanolamine of the general formula

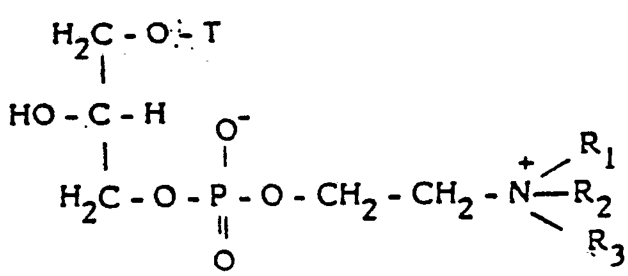

I

in which

T denotes a triphenylmethyl group which is unsubstituted or monosubstituted or polysubstituted by $C_1$-$C_6$-alkyl, $C_1$-$C_6$-alkoxy or halogen, and the radicals

$R_1$, $R_2$ and $R_3$ are either identical and represent in each case a methyl group or are different, in which case two of the radicals $R_1$, $R_2$ and $R_3$ always denote hydrogen and the third radical represents a triphenylmethyl group which is unsubstituted or monosubstituted or polysubstituted by $C_1$-$C_6$-alkyl, $C_1$-$C_6$-alkoxy or halogen, characterized in that sn-glycero-3-phosphocholine or sn-glycero-3-phospho-(N-triphenylmethyl)ethanolamine of the general formula

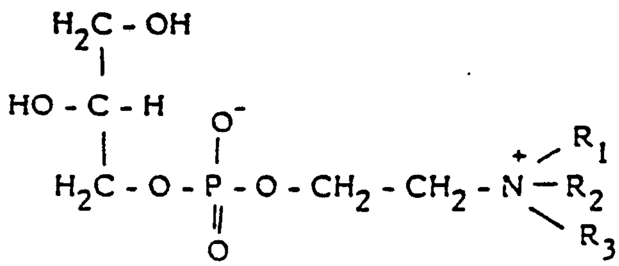

II

in which

$R_1$, $R_2$ and $R_3$ have the meaning indicated in formula I, salts thereof with inorganic or organic acids or bases or a complex thereof with metal salts are tritylated at the oxygen in position 1 of the glycerol by being reacted with a reactive triphenylmethyl derivative of the general formula

T-X

III

in which

T is as defined in formula I and

X denotes a reactive detachable group, such as chlorine, bromine or iodine, in an inert organic solvent or solvent mixture at temperatures from room temperature up to the boiling point of the solvent or of the lowest-boiling solvent component in the solvent mixture.

2. Process according to Claim 1, characterized in that the active triphenylmethyl derivative of the general formula III used is a 1.5-fold to 3-fold molar excess of triphenylmethyl chloride per mole of the compound of the general formula II employed.

3. Process according to Claims 1 and 2, characterized in that the reaction is carried out in the presence of an excess of a proton acceptor.

4. Process according to Claims 1 to 3, characterized in that the reaction is carried out in the presence, as a proton acceptor, of a tertiary amine or a heterocyclic base.

5. Process according to Claims 1 to 4, characterized in that the reaction is carried out within the temperature range between 20 and 80°C.

6. The use of the compounds of the general formula I prepared by the process according to Claim 1 for the synthesis of phosphatidylcholines and phosphatidylethanolamines which are pure enantiomers and have a defined chemical structure and carry, in positions 1 and 2 of the glycerol, acyl radicals which are different, independently of one another.

7. Use according to Claim 6, for the preparation of 1,2-diacyl-sn-glycero-3-phosphocholines and 1,2-diacyl-sn-glycero-3-phosphoethanolamines which contain mixed substituents and have the general formula

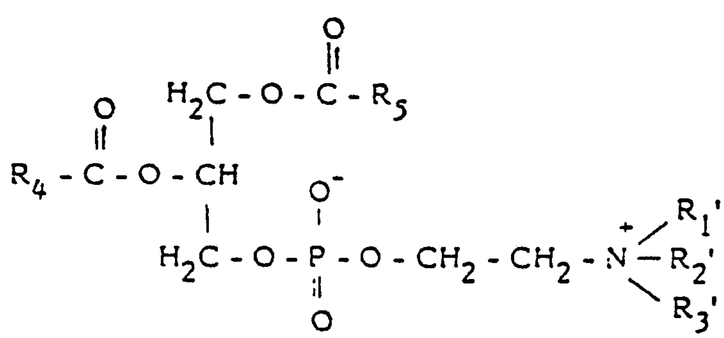

IV

in which

$R_1'$, $R_2'$ and $R_3'$ are identical and are either 3 hydrogen atoms or 3 methyl groups in each case and

$R_4$ and $R_5$ are different and, independently of one another, denote a linear or branched $C_1$-$C_{24}$-alkyl radical or a linear or branched, mono-unsaturated or polyunsaturated $C_3$-$C_{24}$-alkenyl radical each of which is unsubstituted or monosubstituted or polysubstituted by halogen or alkoxy,

by acylating, by means of a derivative, having an acylating action, of a carboxylic acid of the general formula $R_4$-COOH, in the presence of an acid binding agent, a compound of the general formula I to give a compound of the general formula

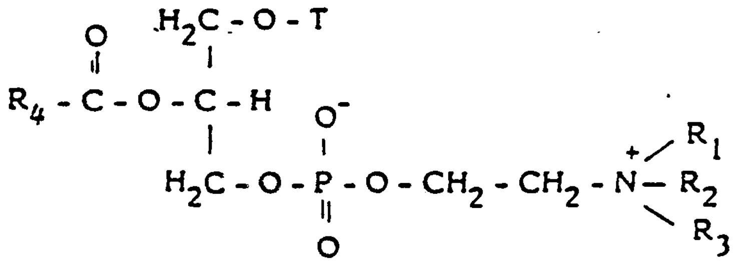

V

in which
T, $R_1$, $R_2$ and $R_3$ are as defined in formula I and $R_4$ has the meaning indicated in formula IV, after which the 1-O-triphenylmethyl group is split off from a resulting compound of the general formula V by the action of acids, subject to the proviso that, in the case of compounds of the formula V in which one of the radicals $R_1$, $R_2$ and $R_3$ is a triphenyl methyl group, the acid is a Lewis acid, with the formation of a 2-acyl-sn-glycero-3-phosphocholine or 2-acyl-sn-glycero-3-phospho-(N-triphenylmethyl)-ethanolamine of the general formula

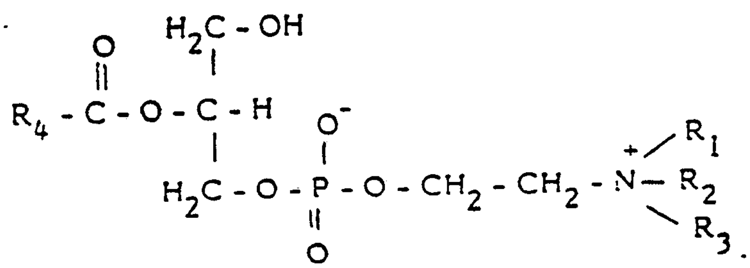

VI
in which
T, $R_1$, $R_2$, $R_3$ and R4 have the meaning indicated above, and the compound of the general formula VI is acylated further by being reacted, in the presence of an acid binding agent, with a derivative, having an acylating action, of a carboxylic acid of the general formula $R_5$-COOH to give a 1,2-diacyl-sn-glycero-3-phosphocholine or 1,2-diacyl-sn-glycero-3-phospho-(N-triphenylmethyl)-ethanolamine of the general formula

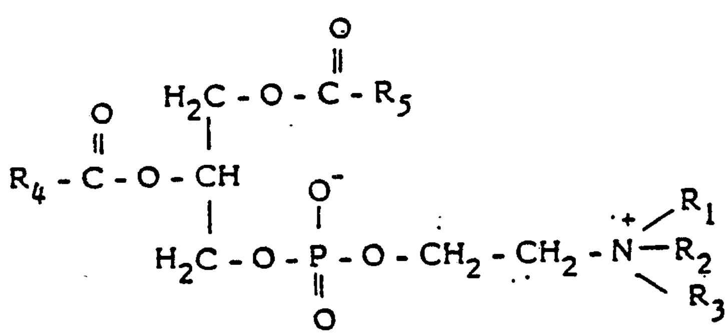

IVa
in which
$R_1$, $R_2$ and $R_3$ are as defined in formula I and $R_4$ and $R_5$ have the meaning indicated in formula IV, after which a resulting compound of the general formula IVa in which one of the radicals $R_1$and $R_3$ denotes a triphenylmethyl group and the two others denote hydrogen is converted, by the action of acids in aprotic solvents, into a compound of the general formula IV in which the radicals $R_1'$, $R_2'$ and $R_3'$ denote hydrogen.

**Revendications** pour les états contractants BE, CH, DE,FR, GB, IT, LI, LU, NL, SE

1. Dérivés triphénylméthyle de la sn-glycéro-3-phosphocholine et de la sn-glycéro-3-phosphoéthanolamine de formule générale

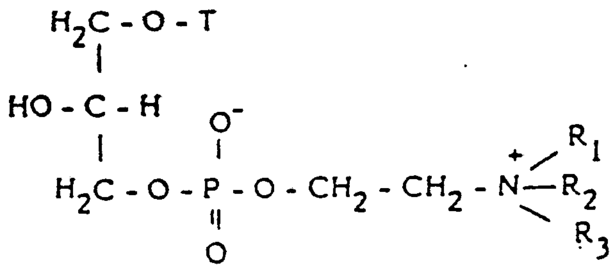

I, dans laquelle

T désigne un groupe triphénylméthyle non substitué ou encore mono- ou polysubstitué par des radicaux alcoyle en $C_1$ - $C_6$, alcoxy en $C_1$ - $C_6$ ou par des atomes d'halogène, et les radicaux.

$R_1$, $R_2$, $R_3$ sont identiques et représentent respectivement un groupe méthyle ou sont différents, dans ce cas, deux des radicaux $R_1$, $R_2$ et $R_3$ désignant toujours l'hydrogène et le troisième radical représentant un groupe triphénylméthyle non substitué ou encore mono- ou polysubstitué par des radicaux alcoyle en $C_1$ - $C_6$, alcoxy en $C_1$ - $C_6$ ou par des atomes d'halogène.

2. Procédé pour la préparation des composés de formule I selon la Revendication 1, caractérisé en ce qu'on soumet la sn-glycéro-3-phosphocholine ou la sn-glycéro-3-phospho-(N-triphénylméthyl)-éthanolamine de formule générale

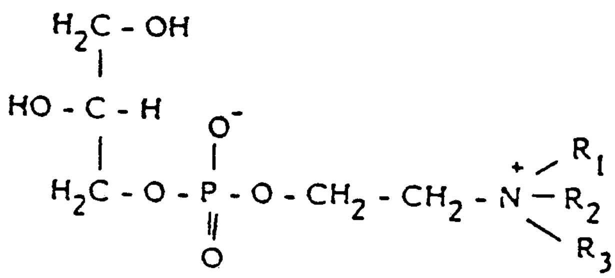

II, dans laquelle

$R_1$, $R_2$ et $R_3$ sont définis comme spécifié ci-dessus, leurs sels avec des acides ou des bases inorganiques ou organiques ou leurs complexes avec des sels de métaux par réaction avec un dérivé triphénylméthyle réactif de formule générale

T - X

III, dans laquelle

T est défini comme dans la formule I, et

X désigne un groupe réactif scindable, tel que chlore, brome ou iode,

dans un solvant ou mélange de solvants organiques inertes aux températures allant de la température ambiante à la température d'ébullition du solvant ou des composants solvants à bas point d'ébullition du mélange de solvants, à une tritylation sur l'oxygène en position 1 de la glycérine.

3. Procédé selon la Revendication 2, caractérisé en ce qu'on utilise comme dérivé triphénylméthyle actif de formule generale III un excés 1,5 à 3 fois molaire de chlorure de triphénylméthyle par mole de composé de formule générale II introduit.

4. Procédé selon les Revendications 2 et 3, caractérisé en ce qu'on effectue la réaction en présence d'un excès d'un accepteur de protons.

5. Procédé selon les Revendications 2 à 4, caractérisé en ce qu'on effectue la réaction en présence d'une amine tertiaire ou d'une base hétérocyclique en tant qu'accepteur de protons.

6. Procédé selon les Revendications 2 à 5, caractérisé en ce qu'on effectue la réaction dans l'intervalle de température entre 20 et 80° C.

7. Utilisation des composés de formule générale 1 selon la Revendication 1 pour la préparation phosphatidylcholines et phosphatidyléthanolamines énantiomérement pures de structures chimiquement définie, qui portent en positions 1 et 2 de la glycérine des radicaux acyle indépendamment différents l'un de l'autre.

8. Utilisation selon la Revendication 7, pour la préparation des 1,2 diacyl-sn-glycéro-3-phosphocholines et 1,2-diacyl-sn-glycéro-3-phosphoéthanolamine à substitution mixte de formule générale

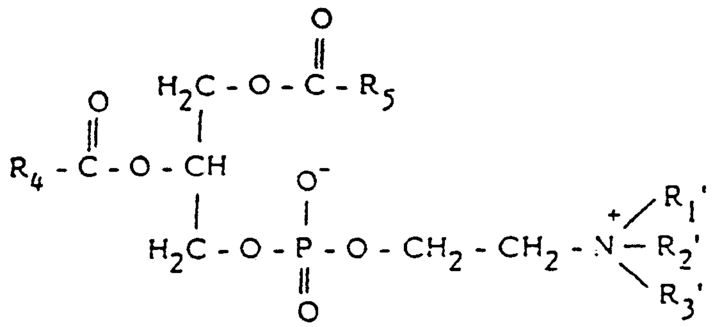

IV, dans laquelle

$R_1'$, $R_2'$, $R_3'$ sont identiques et désignent respectivement 3 atomes d'hydrogène ou 3 groupes méthyle,

$R_4$ et $R_5$ sont différents et désignent, indépendamment l'un de l'autre, un radical alcoyle en $C_1$ à $C_{24}$ linéaire ou ramifié ou un radical alcényle en $C_3$ à $C_{24}$ mono- ou poly-insaturé, linéaire ou ramifié, mono- ou polysubstitués par un atome d'halogène ou un groupe alcoxy,

en ce que l'on acyle un composé de formule générale I avec un dérivé à action acylante d'un acide carboxylique de formule générale $R_4COOH$ en obtenant un composé de formule générale

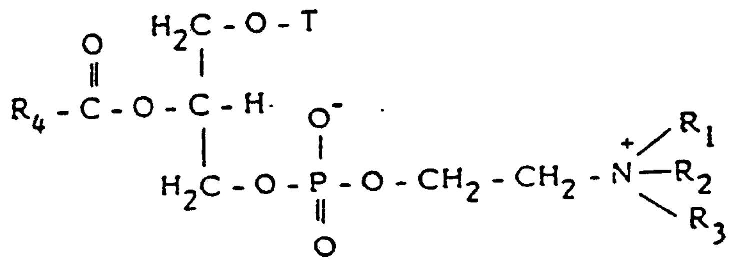

V,

dans laquelle

T, $R_1$, $R_2$ et $R_3$ sont définis comme dans la formule I et

$R_4$ est défini comme spécifié dans la formule IV,

après quoi, à partir d'un composé de formule générale V obtenu, on procède en faisant agir des acides, dans la mesure où dans les composés de formule V dans lesquels l'un des radicaux $R_1$, $R_2$ et $R_3$ est un groupe triméthylphényle, l'acide est un acide de Lewis, au clivage du groupe 1-O-triphénylméthyle avec formation d'une 2-acyl-sn-glycéro-3-phosphocholine ou d'une 2-acyl-sn-glycéro-3-phospho-(N-triphénylméthyl)-éthanolamine de formule générale

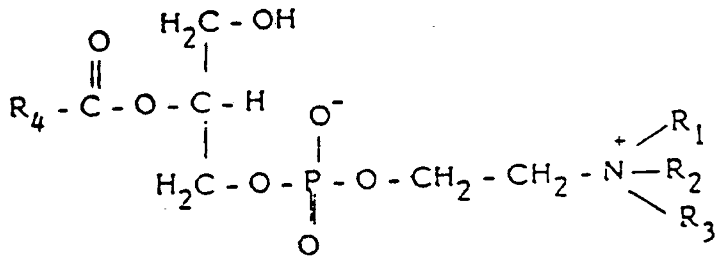

VI, dans laquelle

$R_1$, $R_2$, $R_3$ et $R_4$ ont les mêmes définitions que méntionné ci-dessus et on acyle une nouvelle fois le composé de formule générale VI par réaction avec un dérivé à action acylante d'un acide carboxylique de formule générale $R_5COOH$ en formant une 1,2-diacyl-sn-glycéro-3-phosphocholine ou 1,2-diacyl-sn-glycéro-3-phospho-(N-triphénylméthyl)-éthanolamine de formule générale

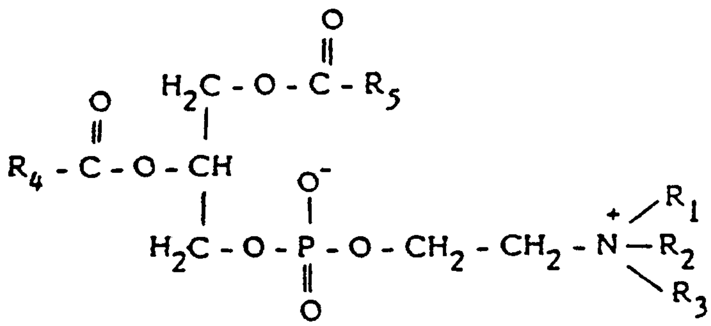

IVa, dans laquelle
$R_1$, $R_2$,$R_3$ sont définis comme dans la formule I,
$R_4$ et $R_5$ sont définis comme spécifié dans la formule IV, après quoi on convertit un composé de formule générale IVa obtenu, dans lequel l'un des radicaux $R_1$, $R_2$ et $R_3$ désigne un groupe triphénylméthyle, sous l'action d'acides dans des solvants aprotiques, en un composé de formule générale IV, dans laquelle les radicaux $R_1'$, $R_2'$ et $R_3'$ désignent un atome d'hydrogène.

**Revendications** pour l'état contractant AT

1. Procédé pour la préparation des nouveaux dérivés triphénylméthyle de la sn-glycéro-3-phosphocholine et de la sn-glycéro-3-phosphoéthanolamine de formule générale

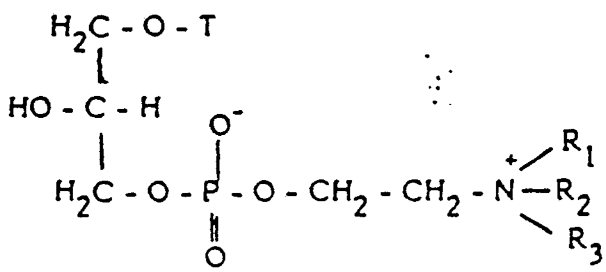

I, dans laquelle
T désigne un groupe triphénylméthyle non substitué ou encore mono- ou polysubstitué par des radicaux alcoyle en $C_1$ - $C_6$, alcoxy en $C_1$ - $C_6$ ou par des atomes d'halogène, et les radicaux.
$R_1$, $R_2$, $R_3$ sont identiques et représentent respectivement un groupe méthyle ou sont différents, dans ce cas, deux des radicaux $R_1$,$R_2$ et $R_3$ désignant toujours l'hydrogène et le troisième radical représentant un groupe triphénylméthyle non substitué ou encore mono - ou polysubstitué par des radicaux alcoyle en $C_1$ -$C_6$, alcoxy en $C_1$ - $C_6$ ou par des atomes d'halogène, caractérisé en ce qu'on soumet la sn-glycéro-3-phosphocholine ou la sn-glycéro-3-phospho-(N-triphénylméthyl)-éthanolamine de formule générale

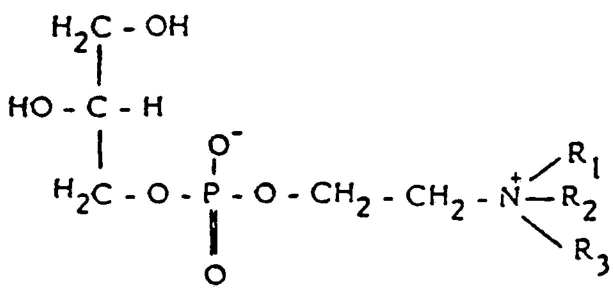

II, dans laquelle
$R_1$, $R_2$ et $R_3$ sont définis comme spécifié ci-dessus, leurs sels avec des acides ou des bases inorganiques ou organiques ou leurs complexes avec des sels de métaux par réaction avec un dérivé triphénylméthyle réactif de formule générale

T - X

III, dans laquelle

T est défini comme dans la formule I et

X désigne un groupe réactif scindable, tel que chlore, brome ou iode,

dans un solvant ou mélange de solvants organiques inertes aux températures allant de la température ambiante à la température d'ébullition du solvant ou des composants solvants à bas point d'ébullition du mélange de solvants, à une tritylation sur l'oxygène en position 1 de la glycérine.

2. Procédé selon la Revendication 1, caractérisé en ce qu'on utilise comme dérivé triphénylméthyle actif de formule générale III un excés 1,5 à 3 fois molaire de chlorure de triphénylméthyle par mole de composé de formule générale II introduit.

3. Procédé selon les Revendications 1 et 2, caractérisé en ce qu'on effectue la réaction en présence d'un excès d'un accepteur de protons.

4. Procédé selon les Revendications 1 à 3, caractérisé en ce qu'on effectue la réaction en présence d'une amine tertiaire ou d'une base hétérocyclique en tant qu'accepteur de protons.

5. Procédé selon les Revendications 1 à 4, caractérisé en ce qu'on effectue la réaction dans l'intervalle de température entre 20 et 80°C.

6. Utilisation des composés de formule générale I, préparés d'après le procédé selon la Revendication 1, pour la synthèse de phosphatidylcholines et phosphatidyléthanolamines énantiomérement pures de structure chimmiquement définie, qui portent en positions 1 et 2 de la glycérine des radicaux acyle indépendamment différents l'un de l'autre.

7. Utilisation selon la Revendication 6 pour la préparation des 1,2 diacyl-sn-glycéro-3-phosphocholines et 1,2-diacyl-sn-glycéro-3-phosphoéthanolamines à substitution mixte de formule générale

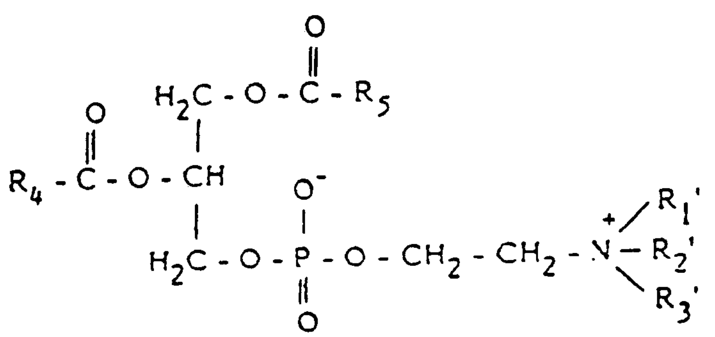

IV, dans laquelle

$R_1', R_2', R_3'$ sont identiques et désignent respectivement 3 atomes d'hydrogène ou 3 groupes méthyle,

$R_4$ et $R_5$ sont différents et désignent, indépendemment l'un de l'autre, un radical alcoyle en $C_1$ à $C_{24}$ linéaire ou ramifié ou un radical alcényle en $C_3$ à $C_{24}$ mono- ou poly-insaturé, linéaire ou ramifié, mono- ou polysubstitués par un atome d'halogène ou un groupe alcoxy,

en ce que l'on acyle un composé de formule générale I avec un dérivé à action acylante d'un acide carboxylique de formule générale $R_4COOH$ en présence d'un fixateur, d'acide en obtenant un composé de formule générale

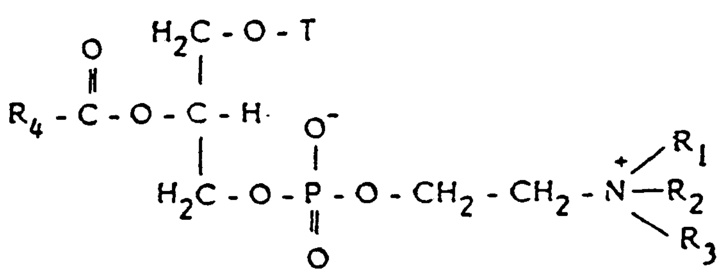

V,

dans laquelle

T, $R_1$, $R_2$, $R_3$ sont définis comme dans la formule I et

$R_4$ est défini comme spécifié dans la formule IV,

après quoi, à partir d'un composé de formule générale V obtenu, on procède en faisant agir des acides, dans la mesure où dans les composés de formule V dans lesquels l'un des radicaux $R_1$, $R_2$ et $R_3$ est un groupe triphénylméthyle l'acide est un acide de Lewis, au clivage du groupe 1-O-triphénylméthyle avec formation d'une 2-acyl-sn-glycéro-3-phosphocholine ou d'une 2-acyl-sn-glycéro-3-phospho-(N-triphénylméthyl)-éthanolamine de formule générale

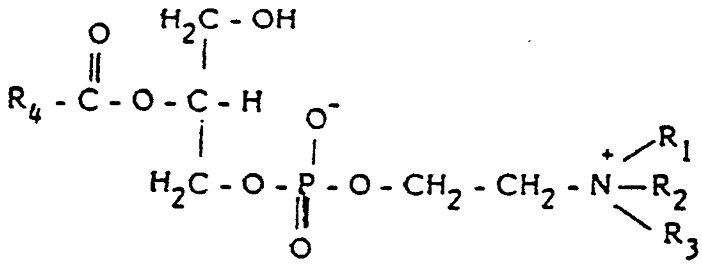

VI, dans laquelle

T, $R_1$, $R_2$, $R_3$ et $R_4$ ont les mêmes définitions que mentionné ci-dessus et on acyle une nouvelle fois le composé de formule générale VI par réaction avec un dérivé à action acylante d'un acide carboxylique de formule générale $R_5COOH$ en présence d'un fixateur d'acide en formant une 1,2-diacyl-sn-glycéro-3-phosphocholine ou 1,2-diacyl-sn-glycéro-3-phospho-(N-triphénylméthyl)-éthanolamine de formule générale

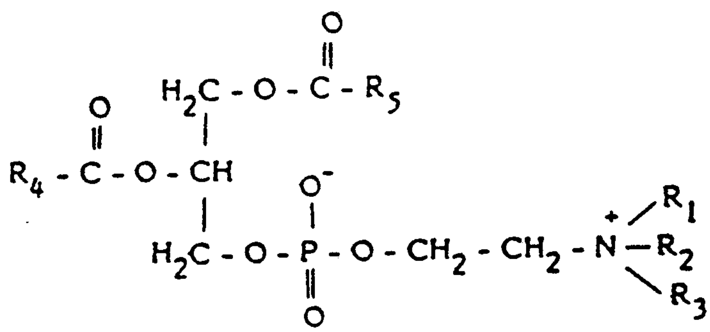

IVa, dans laquelle

$R_1$, $R_2$, $R_3$ sont définis comme dans la formule I,

$R_4$ et $R_5$ sont définis comme spécifié dans la formule IV,

après quoi on convertit un composé de formule générale IVa obtenu dans lequel l'un des radicaux $R_1$, $R_2$, et $R_3$ est un groupe triphénylméthyle group sous l'action d'acides dans des solvants aprotiques, en un composé de formule générale IV, dans laquelle les radicaux $R_1'$, $R_2'$ et $R_3'$ désignent un atome d'hydrogène.